# EUROPEAN PATENT APPLICATION

(11) **EP 3 968 306 A1**
(43) Date of publication of application: **16.03.2022**
(21) Application number: 20821825.5
(22) Date of filing: 14.06.2020
(51) Int. Cl.: G08G 1/0967, B60W 30/14

(54) **LANE CHANGE METHOD AND DEVICE FOR VEHICLE**

(30) Priority: 14.06.2019 CN 201910515822
(71) Applicant: Huawei Technologies Co., Ltd., Shenzhen, Guangdong 518129 (CN)
(72) Inventor: LIU, Yan, Shenzhen, Guangdong 518129 (CN)
(74) Representative: Gill Jennings & Every LLP
(86) International application number: PCT/CN2020/096009
(87) International publication number: WO 2020/249122

(57) **Abstract**

A vehicle lane changing method and apparatus are provided. The method includes: receiving lane changing warning information sent by a server; obtaining first lane changing indication information; performing lane changing based on the first lane changing indication information; and sending a lane changing result of the first vehicle to the server. According to the solution, the server performs lane changing decision and indication for the first vehicle and the second vehicle, so that safe and reliable lane changing can be automatically implemented, thereby improving road traffic efficiency.

## Description

This application claims priority to Chinese Patent Application No. 201910515822.6, filed with the China National Intellectual Property Administration on June 14, 2019 and entitled "VEHICLE LANE CHANGING METHOD AND APPARATUS", which is incorporated herein by reference in its entirety.

### TECHNICAL FIELD

This application relates to the field of Vehicle-to-everything(V2X) technologies, and in particular, to a vehicle lane changing method and apparatus.

### BACKGROUND

Currently, an automobile technology is developing towards low carbonization, informatization, intelligenization, and networking, bringing profound challenges and opportunities to development of the automobile industry. An smart connected vehicles technology is considered to be a most revolutionary technological reform in more than a century since the birth of an automobile. Under impact of a new round of science and technology and industrial revolution in the world, the automobile industry is to experience a breakthrough innovation in next 5 to 10 years. A conventional automobile industry is to be comprehensively upgraded and transformed by using an information technology, a network technology, and the like, and the automobile industry is to be deeply integrated with the internet industry.

The smart connected vehicles technology aims to gradually implement highly/completely automated driving. In the smart connected vehicles technology, a vehicle lane changing technology is a problem that needs to be resolved. In the conventional technology, there is no solution in which vehicle lane changing can be automatically implemented during assisted driving/automated driving of a vehicle. Generally, mutual lane changing and lane giving are implemented by relying on drivers of vehicles to mutually identify lane changing/passive lane changing requests (with the help of left turn lights/right turn lights), visually observe lane changing occasions, and the like.

Therefore, a problem of automatic vehicle lane changing needs to be urgently resolved.

### SUMMARY

This application provides a lane changing method and apparatus, to automatically implement safe and reliable lane changing, thereby improving road traffic efficiency.

According to a first aspect, a vehicle lane changing method is provided. The method includes: receiving lane changing warning information sent by a server, where the lane changing warning information includes at least one piece of the following information: information about a distance between a first vehicle and a lane changing point, information about a distance between a second vehicle and the lane changing point, and lane changing time information, the first vehicle and the second vehicle travel on different lanes, and the first vehicle performs, at the lane changing point, lane changing to a lane on which the second vehicle is located; obtaining first lane changing indication information, where the first lane changing indication information includes at least one piece of the following information: recommended vehicle speed interval information of the first vehicle and recommended vehicle speed interval information of the second vehicle; performing lane changing based on the first lane changing indication information; and sending a lane changing result of the first vehicle to the server. In this aspect, a lane changing decision and indication of the server for the first vehicle and the second vehicle are received, so that safe and reliable lane changing can be automatically implemented, thereby improving road traffic efficiency.

In an implementation, the method further includes: reporting vehicle traveling status information and surrounding environment information of the first vehicle to the server. In this implementation, the first vehicle reports the vehicle traveling status information and the surrounding environment information of the first vehicle to the server, so that the server can accurately identify the lane changing point.

In another implementation, after the receiving lane changing warning information sent by a server, the method further includes: sending a response message to the server.

In another implementation, the method further includes: if the lane changing result indicates that the lane changing succeeds, receiving recovery indication information sent by the server, where the recovery indication information includes vehicle speed information and lane information; and recovering, based on the recovery indication information, to a vehicle speed corresponding to the vehicle speed information for traveling, and/or to a lane corresponding to the lane information for traveling.

In another implementation, before the first vehicle bypasses an obstacle in a same direction or an opposite direction relative to the second vehicle, the method further includes: receiving obliquely-front first vehicle and road information that is of the first vehicle and that is sent by the server, where the obliquely-front vehicle and road information of the first vehicle includes at least one piece of the following information: obliquely-front vehicle traveling status information of the first vehicle and obliquely-front obstacle information of the first vehicle; and after the first vehicle bypasses the obstacle and before the first vehicle recovers to the original lane for traveling, the method further includes: receiving front second vehicle and road information that is of the lane on which the obstacle is located and that is sent by the server.

In another implementation, the method further includes: sending a lane changing request to the server, where the lane changing request includes the information about the distance between the first vehicle and the lane changing point.

In another implementation, the method further includes: sending the first lane changing indication information to the server.

According to a second aspect, a vehicle lane changing method is provided. The method includes: receiving lane changing warning information sent by a server, where the lane changing warning information includes at least one piece of the following information: information about a distance between a first vehicle and a lane changing point, information about a distance between a second vehicle and the lane changing point, and lane changing time information, the first vehicle and the second vehicle travel on different lanes, and the first vehicle performs, at the lane changing point, lane changing to a lane on which the second vehicle is located; receiving first lane changing indication information sent by the server, where the first lane changing indication information includes at least one piece of the following information: recommended vehicle speed interval information of the first vehicle and recommended vehicle speed interval information of the second vehicle; and performing lane giving based on the first lane changing indication information. In this aspect, a lane changing decision and indication of the server for the first vehicle and the second vehicle are received, so that safe and reliable lane changing can be automatically implemented, thereby improving road traffic efficiency.

In an implementation, the method further includes: reporting vehicle traveling status information and surrounding environment information of the second vehicle to the server.

In another implementation, the method further includes: sending a response message to the server, where the response message is used to indicate that the lane giving is supported or the lane giving is not supported.

According to a third aspect, a vehicle lane changing method is provided. The method includes: identifying a lane changing point; sending lane changing warning information, where the lane changing warning information includes at least one piece of the following information: information about a distance between a first vehicle and the lane changing point, information about a distance between a second vehicle and the lane changing point, and lane changing time information, the first vehicle and the second vehicle travel on different lanes, and the first vehicle performs, at the lane changing point, lane changing to a lane on which the second vehicle is located; sending first lane changing indication information, where the first lane changing indication information includes at least one piece of the following information: recommended vehicle speed interval information of the first vehicle and recommended vehicle speed interval information of the second vehicle; and obtaining a lane changing result of the first vehicle. In this aspect, the server performs lane changing decision and indication for the first vehicle and the second vehicle, so that safe and reliable lane changing can be automatically implemented, thereby improving road traffic efficiency.

In an implementation, the identifying a lane changing point includes: receiving vehicle traveling status information and surrounding environment information of the first vehicle, and vehicle traveling status information and surrounding environment information of the second vehicle; obtaining position information of the first vehicle and the second vehicle; and identifying the lane changing point based on the vehicle traveling status information and the surrounding environment information of the first vehicle, the vehicle traveling status information and the surrounding environment information of the second vehicle, and the position information of the first vehicle and the second vehicle. In this implementation, the server can accurately identify the lane changing point by using the vehicle traveling status information and the surrounding environment information of the first vehicle and the second vehicle, and the position information of the first vehicle and the second vehicle.

In another implementation, after the sending lane changing warning information, the method further includes: receiving a response message of the first vehicle and/or a response message of the second vehicle. In this implementation, after sending the lane changing warning information, the server needs to wait for the response message of the first vehicle and/or the response message of the second vehicle; and if receiving no response message of the first vehicle and/or no response message of the second vehicle, may temporarily do not indicate lane changing, to avoid a traffic accident due to inconsistency between lane changing behavior and lane giving behavior.

In another implementation, after the sending lane changing warning information, the method further includes: if a response message of the second vehicle is that lane giving is not supported or receiving no response message of the second vehicle, sending first lane changing deferring indication information to the first vehicle. In this implementation, after sending the lane changing warning information, if receiving no response message of the second vehicle or receiving the response message that the second vehicle does not support the lane giving, the server needs to indicate the first vehicle to defer the lane changing, to avoid a traffic accident due to inconsistency between lane changing behavior and lane giving behavior.

In another implementation, the method further includes: generating the first lane changing indication information.

In another implementation, the method further includes: if the lane changing result indicates that the lane changing succeeds, sending recovery indication information to the first vehicle and/or the second vehicle, where the recovery indication information includes vehicle speed information and lane information. In this implementation, when the first vehicle successfully performs lane changing, the first vehicle or the second vehicle is indicated to recover to an original vehicle speed for traveling or travel at a recommended vehicle speed, to improve road traffic efficiency and smoothness.

In another implementation, before the first vehicle bypasses an obstacle in a same direction or an opposite direction relative to the second vehicle, the method further includes: obtaining obliquely-front first vehicle and road information of the first vehicle, where the obliquely-front vehicle and road information of the first vehicle includes at least one piece of the following information: obliquely-front vehicle traveling status information of the first vehicle and obliquely-front obstacle information of the first vehicle; and sending the obliquely-front first vehicle and road information of the first vehicle to the first vehicle and/or an obliquely-front vehicle of the first vehicle; and after the first vehicle bypasses the obstacle and before the first vehicle recovers to an original lane for traveling, the method further includes: obtaining front second vehicle and road information of the lane on which the obstacle is located; and sending the front second vehicle and road information of the lane on which the obstacle is located to the first vehicle. In this implementation, due to shielding by the obstacle or the like, before the lane changing, the first vehicle or the obliquely-front vehicle of the first vehicle cannot directly obtain the obliquely-front vehicle and road information of the first vehicle, and after the lane changing, the first vehicle cannot obtain the front vehicle and road information of the lane on which the obstacle is located. For safe and reliable lane changing, the server can obtain the information, and send the information to the first vehicle or the obliquely-front vehicle of the first vehicle.

In another implementation, the identifying a lane changing point includes: obtaining at least one piece of the following information: tidal lane information, vehicle traveling status information of a tidal lane, or vehicle traveling status information of a neighboring lane of the tidal lane; and identifying, based on the at least one piece of obtained information, a lane changing point at which at least one original first vehicle on the tidal lane performs lane changing to a contra-directional neighboring lane, and a lane changing point at which at least one third vehicle performs lane changing to the tidal lane after the tidal lane is recovered, where the at least one first vehicle performs lane changing through lane borrowing from at least one second vehicle on the contra-directional neighboring lane, and the at least one third vehicle performs lane changing through lane borrowing from at least one fourth vehicle on a lane on which the at least one third vehicle is located. In this implementation, in a tidal lane scenario, the server can identify the lane changing point based on one or more pieces of the obtained tidal lane information, vehicle traveling status information of the tidal lane, or vehicle traveling status information of the neighboring lane of the tidal lane.

In another implementation, the sending first lane changing indication information includes: sending the first lane changing indication information to the at least one original first vehicle on the tidal lane, where the first lane changing indication information is used to indicate the at least one original first vehicle on the tidal lane to perform lane changing to the contra-directional neighboring lane. In this implementation, during tidal lane changing, a current vehicle on the tidal lane is first indicated to perform lane changing to the neighboring lane in an opposite direction to the tidal lane, to implement orderly lane changing.

In another implementation, the sending first lane changing indication information includes: after all the at least one original first vehicle on the tidal lane performs lane changing to the contra-directional neighboring lane, sending second lane changing indication information to the at least one second vehicle that is to perform lane changing to the tidal lane after the tidal lane is recovered, where the second lane changing indication information is used to indicate the at least one second vehicle to perform lane changing to the tidal lane. In this implementation, during tidal lane changing, after all current vehicles on the tidal lane perform lane changing to the neighboring lane in the opposite direction to the tidal lane, a vehicle on a neighboring lane in a same direction as the tidal lane to perform lane changing to the tidal lane, to relieve traffic pressure of the neighboring lane in the same direction as the tidal lane.

In another implementation, the identifying a lane changing point includes: receiving a lane changing request of the first vehicle, where the lane changing request includes the information about the distance between the first vehicle and the lane changing point; and determining the lane changing point based on position information of the first vehicle and the information about the distance between the first vehicle and the lane changing point. In this implementation, in an active vehicle lane changing scenario, the server determines the lane changing point based on the lane changing request of the first vehicle.

In another implementation, before the sending first lane changing indication information, the method further includes: receiving the first lane changing indication information sent by the first vehicle.

According to a fourth aspect, a lane changing apparatus is provided. The lane changing apparatus is configured to implement the behavior and the function of the first vehicle in the foregoing method. The function may be implemented by hardware, or may be implemented by hardware executing corresponding software. The hardware or the software includes one or more modules corresponding to the foregoing function.

According to a fifth aspect, a lane changing apparatus is provided. The lane changing apparatus is configured to implement the behavior and the function of the second vehicle in the foregoing method. The function may be implemented by hardware, or may be implemented by hardware executing corresponding software. The hardware or the software includes one or more modules corresponding to the foregoing function.

According to a sixth aspect, a lane changing apparatus is provided. The lane changing apparatus is configured to implement the behavior and the function of the server in the foregoing method. The function may be implemented by hardware, or may be implemented by hardware executing corresponding software. The hardware or the software includes one or more modules corresponding to the foregoing function.

According to a seventh aspect, a lane changing apparatus is provided, including a processor, a transceiver, and a memory. The memory is configured to store a computer program, the computer program includes program instructions, and the processor executes the program instructions, to enable the lane changing apparatus to perform the method in any one of the first aspect or the implementations of the first aspect.

According to an eighth aspect, a lane changing apparatus is provided, including a processor, a transceiver, and a memory. The memory is configured to store a computer program, the computer program includes program instructions, and the processor executes the program instructions, to enable the lane changing apparatus to perform the method in any one of the second aspect or the implementations of the second aspect.

According to a ninth aspect, a lane changing apparatus is provided, including a processor, a transceiver, and a memory. The memory is configured to store a computer program, the computer program includes program instructions, and the processor executes the program instructions, to enable the lane changing apparatus to perform the method in any one of the third aspect or the implementations of the third aspect.

According to a tenth aspect, a computer-readable storage medium is provided. The computer-readable storage medium stores instructions, and when the instructions are run on a computer, the computer is enabled to perform the methods according to the foregoing aspects.

According to an eleventh aspect, a computer program product including instructions is provided. When the computer program product runs on a computer, the computer is enabled to perform the methods according to the foregoing aspects.

### BRIEF DESCRIPTION OF DRAWINGS

To describe the technical solutions in embodiments of this application or in the background more clearly, the following describes the accompanying drawings for describing the embodiments of this application or the background.
FIG. 1 is a schematic diagram of vehicle lane changing due to lane combination;
FIG. 2 is a schematic diagram of an intelligent transportation system based on a V2X architecture according to an embodiment;
FIG. 3 is an architectural diagram of a vehicle lane changing system according to an embodiment of this application;
FIG. 4 is a schematic flowchart of a vehicle lane changing method according to an embodiment of this application;
FIG. 5A to FIG. 5C are a schematic flowchart of another vehicle lane changing method according to an embodiment of this application;
FIG. 6 is a schematic diagram of vehicle lane changing in a lane convergence scenario;
FIG. 7A to FIG. 7C are a schematic flowchart of still another vehicle lane changing method according to an embodiment of this application;
FIG. 8 is a schematic diagram in which a lane obstacle has not been bypassed in a same direction;
FIG. 9 is a schematic diagram in which a lane obstacle has been bypassed in a same direction;
FIG. 10A to FIG. 10C are a schematic flowchart of yet another vehicle lane changing method according to an embodiment of this application;
FIG. 11 is a schematic diagram in which a lane obstacle has not been bypassed in an opposite direction;
FIG. 12 is a schematic diagram in which a lane obstacle has been bypassed in an opposite direction;
FIG. 13A to FIG. 13C are a schematic flowchart of still yet another vehicle lane changing method according to an embodiment of this application;
FIG. 14 is a schematic diagram of tidal lane changing/recovery;
FIG. 15A to FIG. 15C are a schematic flowchart of a further vehicle lane changing method according to an embodiment of this application;
FIG. 16 is a schematic diagram in which a vehicle has not actively performed lane changing;
FIG. 17 is a schematic diagram in which a vehicle recovers to an original lane after actively performing lane changing;
FIG. 18A to FIG. 18C are a schematic flowchart of a still further vehicle lane changing method according to an embodiment of this application;
FIG. 19 is a schematic diagram of a structure of a vehicle lane changing apparatus according to an embodiment of this application;
FIG. 20 is a schematic diagram of a structure of another vehicle lane changing apparatus according to an embodiment of this application;
FIG. 21 is a schematic diagram of a structure of still another vehicle lane changing apparatus according to an embodiment of this application; and
FIG. 22 is a schematic diagram of a structure of yet another vehicle lane changing apparatus according to an embodiment of this application.

### DESCRIPTION OF EMBODIMENTS

The following describes the embodiments of this application with reference to the accompanying drawings in the embodiments of this application.

The following describes concepts of several nouns that may be used in this application:

An V2Xis a huge interactive network including information such as a vehicle position, a speed, and a route. A vehicle collects environment and status information of the vehicle by installing advanced apparatuses such as an in-vehicle sensor, controller, and actuator. The V2Ximplements intelligent information exchange and sharing between a vehicle and X (a pedestrian, a vehicle, a road, a background, or the like) by using a wireless communication and network technology. The V2Xhas complex functions such as environment perception, intelligent decision-making, and collaborative control and execution, to achieve "zero casualties and zero congestion", and finally achieve safety, high efficiency, and energy saving.

A roadside unit (roadside unit, RSU): The RSU is installed on a roadside, and communicates with an on board unit (on board unit, OBU) or a telematics box (telematics box, T-Box) by using a dedicated short range communications (dedicated short range communications, DSRC) technology or long term evolution vehicle (long term evolution vehicle, LTE-V), to implement vehicle identity identification, electronic deduction, vehicle traveling status information reporting, or the like. It may be understood that, in addition to the RSU, another communications unit deployed on end side may have a similar function to the RSU. This is not limited in this application.

### Vehicle lane changing:

The vehicle lane changing is classified into active lane changing and passive lane changing.

Active lane changing: A parallel-traveling vehicle initiates lane changing/a vehicle waits for lane changing at a U-turn road section, where the lane changing is implemented by initially initiating a lane changing request by a vehicle end.

### Passive lane changing:

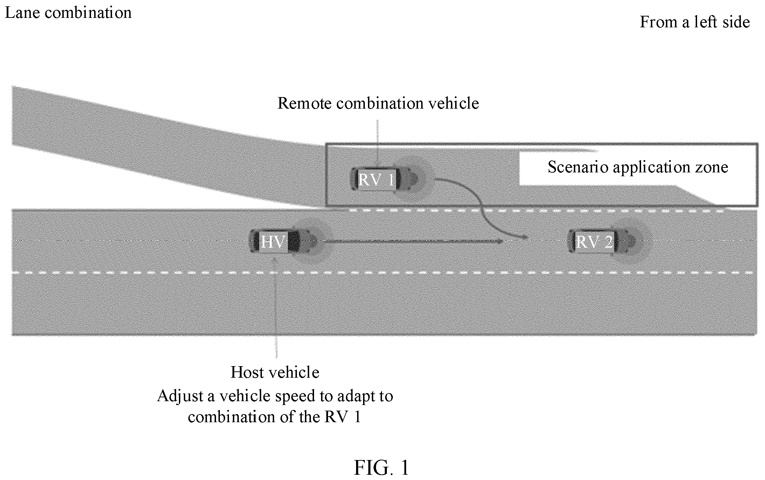

(1) Lane narrowing/lane convergence (or referred to as lane combination): A server end determines that a lane changing point exists, and notifies a vehicle that is on a related lane and that approaches the lane changing point that the lane changing point exists. FIG. 1 is a schematic diagram of vehicle lane changing due to lane combination. It is determined, through identification, that a remote vehicle (remote vehicle, RV) 1 is to perform combination from a left side of a host vehicle (host vehicle, HV), a scenario application zone (scenario application zone) of the combination of the RV 1 is shown in FIG. 1, and the HV needs to adjust a vehicle speed to give a lane for lane changing of the RV 1. The HV needs to pay attention to video information of the scenario application zone of the RV 1.
(2) Lane co-directional/contra-directional obstacle bypassing: A server identifies an obstacle and impact in real time, determines whether a vehicle needs to perform lane changing to bypass the obstacle, and if determining that the vehicle needs to perform lane changing to bypass the obstacle, notifies a vehicle that is on a related lane and that approaches a lane changing point that the vehicle needs to perform lane changing to bypass the obstacle.
(3) Tidal lane: The tidal lane is controlled by a server. When determining a change occasion based on a change policy, the server sends an advance warning to a vehicle on an affected lane.
(4) Special vehicle: A server identifies a vehicle type, for example, an emergency vehicle: a police car, an ambulance, or a fire truck, or an operation vehicle: a sprinkler or a sweeper. The server determines a lane changing policy for the special vehicle and a surrounding vehicle, ensures that such vehicle preferably passes or works safely, and notifies a vehicle on a related lane of a real-time lane changing policy. In addition, for vehicles traveling in a fleet, a lane changing policy needs to be set in consideration of improvement of road traffic efficiency.

V2X communication technology

Currently, there are mainly LTE-V and DSRC. LTE-V defines two modes: PC5 and Uu.

Direct communication (PC5 interface): The direct communication (PC5 interface) is based on a device-to-device (device-to-device, D2D) proximity service (ProSe) in an LTE standard. High-speed and high-density communication of 250 Kph may be implemented by using the PC5 interface formulated based on the latest standard. In an environment without LTE network coverage, adjacent devices may directly communicate with each other.

Network communication (Uu interface): Information is transmitted to another node by being broadcast by using LTE and forwarded by using a V2X server.

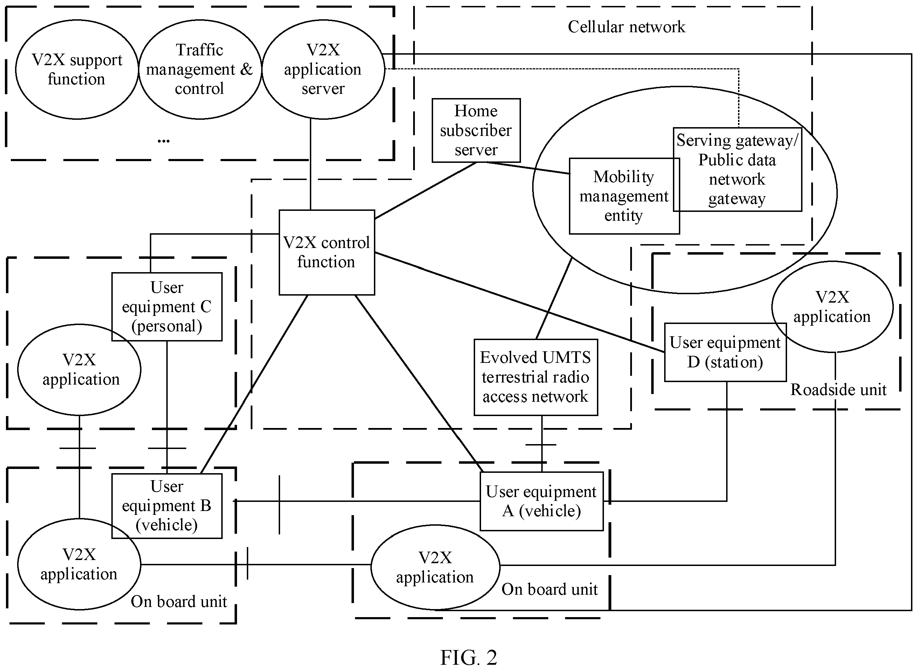

Currently, an V2X mainly includes four scenarios: vehicle-to-vehicle (vehicle-to-vehicle, V2V), vehicle-to-pedestrian (vehicle-to-pedestrian, V2P), V2N, and V2I. FIG. 2 is a schematic diagram of an intelligent transportation system based on a V2X architecture according to an embodiment. The figure shows communication connections of an OBU, a personal side unit, and an RSU with a cellular network (cellular network) and a server. The figure shows two OBUs: an OBU corresponding to user equipment (user equipment, UE) B and an OBU corresponding to UE A, and the UE A and the UE B are two UEs installed in vehicles. V2X applications (V2X applications) are installed in both the UE A and the UE B. The personal side unit is UE C, and a V2X application is installed in the UE C. The RSU includes UE D and a V2X application installed in the UE D, and the UE D is UE installed in a station (station). The OBUs, the PSU, and the RSU further separately communicate with the cellular network. The cellular network includes a plurality of network elements, such as an evolved UMTS terrestrial radio access network (evolved UMTS terrestrial radio access network, E-UTRAN) network element, a mobility management entity (mobility management entity, MME), a serving gateway (serving gateway, SGW), a public data network gateway (public data network gateway, P-GW), and a home subscriber server (home subscriber server, HSS), and further includes a V2X control function (V2X control function) entity. The V2X control function entity is configured to control the UEs in the OBUs, the PSU, and the RSU. The V2X control function entity is further connected to a V2X server. The V2X server includes a V2X support function (V2X support function) entity, a traffic management & control (traffic management & control) function entity, and a V2X application server (V2X application server). The V2X control function entity receives control instructions of the function entities in the V2X server, to control the UEs in the OBUs, the PSU, and the RSU.

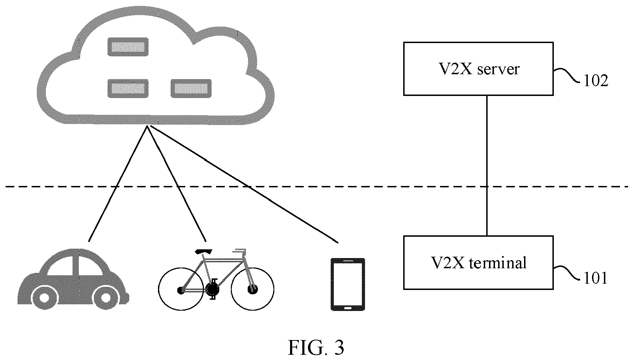

FIG. 3 is an architectural diagram of a vehicle lane changing system according to an embodiment of this application. The figure includes a V2X communications apparatus 101 and a V2X server 102.

101 indicates a V2X terminal, a terminal for short. The terminal may be a vehicle, a non-motor vehicle, an RSU, a portable device, a wearable device, a mobile phone (or referred to as a "cellular" phone), a portable, pocket-type, or handheld terminal, or the like having a communication function. A type of the terminal is not limited in this application. The vehicle is a typical V2X terminal. In the following embodiments, the vehicle is used as an example for description. The embodiments in which the vehicle is used as an example in this application may also be applied to another type of terminal. A person skilled in the art should understand that the V2X terminal may specifically perform a V2X-related business process by using a function unit or apparatus (namely, the V2X communications apparatus) in the V2X terminal. For example, when the V2X terminal is a vehicle, one or more of the following apparatuses in the vehicle perform a method process related to the V2X terminal in the embodiments of this application, that is, the V2X communications apparatus may be any one of the following example apparatuses: a telematics box (telematics box, T-Box), a domain controller (domain controller, DC), a multi-domain controller (multi-domain controller, MDC), an on board unit (on board unit, OBU), and a V2X chip.

102 indicates the V2X server, a server for short. The server may be a V2X platform or a V2X server that manages the V2X terminal. A specific deployment form of the V2X server is not limited in this application. Specifically, the V2X server may be deployed on the cloud, or may be an independent computer device, or the like.

This application provides a vehicle lane changing method and apparatus. A server performs lane changing decision and indication for a first vehicle and a second vehicle, so that safe and reliable lane changing can be implemented, thereby improving road traffic efficiency.

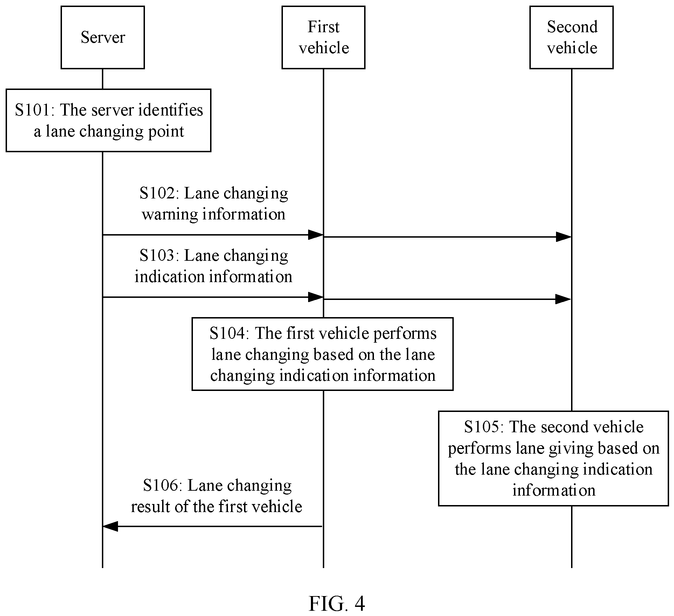

FIG. 4 is a schematic flowchart of a vehicle lane changing method according to an embodiment of this application. For example, the method includes the following steps.

S101: A server identifies a lane changing point.

The lane changing point is a position at which a first vehicle performs lane changing. The lane changing point varies with a lane changing scenario. Active lane changing and passive lane changing are obtained through classification based on a lane changing manner. For the passive lane changing, a lane changing point may be a fixed lane changing point, such as a convergence point of two lanes, or a position at which an obstacle on a road surface needs to be bypassed. Alternatively, the lane changing point may be a changeable lane changing point, such as a lane changing point of a tidal lane. For the active lane changing, that is, vehicle overtaking, a lane changing point is usually a changeable lane changing point.

The server identifies the lane changing point in different manners based on different lane changing manners and different lane changing scenarios.

The server identifies the lane changing point and obtains position information of the lane changing point.

S102: The server separately sends lane changing warning information to the first vehicle and a second vehicle.

Correspondingly, the first vehicle receives the lane changing warning information, and the second vehicle receives the lane changing warning information.

For lane changing, a lane changing warning needs to be given, to notify two lane changing parties to make preparations, for safe and reliable lane changing. If no notification is given in advance, traffic congestion, even a traffic accident, is likely to occur, and the lane changing cannot be successfully performed.

The lane changing warning information includes at least one piece of the following information: information about a distance between the first vehicle and the lane changing point, information about a distance between the second vehicle and the lane changing point, and lane changing time information, the first vehicle and the second vehicle travel on different lanes, and the first vehicle performs, at the lane changing point, lane changing to a lane on which the second vehicle is located.

After receiving the lane changing warning information, the first vehicle and the second vehicle may prepare for the lane changing or lane giving.

S103: The server separately sends lane changing indication information to the first vehicle and/or the second vehicle.

Correspondingly, the first vehicle obtains or receives the lane changing indication information, and the second vehicle receives the lane changing indication information.

After a lane changing warning is given, the lane changing indication information may be sent to the first vehicle and/or the second vehicle, to indicate the first vehicle to start the lane changing, and indicate the second vehicle to start the lane giving. Specifically, the lane changing indication information indicates the first vehicle and the second vehicle to travel at recommended vehicle speeds, so that the first vehicle can perform lane changing to the lane on which the second vehicle is located. The lane changing indication information includes at least one piece of the following information: recommended vehicle speed interval information of the first vehicle and recommended vehicle speed interval information of the second vehicle.

S104: The first vehicle performs lane changing based on the lane changing indication information.

Specifically, the first vehicle travels at a recommended vehicle speed that is of the first vehicle and that is indicated by the lane changing indication information, and performs, at the lane changing point, lane changing to the lane on which the second vehicle is located.

S105: The second vehicle performs lane giving based on the lane changing indication information.

Specifically, the second vehicle travels at a recommended vehicle speed that is of the second vehicle and that is indicated by the lane changing indication information, and performs, at the lane changing point, lane giving to allow the first vehicle to perform lane changing to the lane on which the second vehicle is located.

S106: The first vehicle sends a lane changing result of the first vehicle to the server.

Correspondingly, the server obtains the lane changing result of the first vehicle.

The lane changing result indicates that the first vehicle has completed vehicle speed adjustment and the lane changing by executing the lane changing indication information.

According to the vehicle lane changing method provided in this embodiment of this application, the server performs lane changing decision and indication for the first vehicle and the second vehicle, so that safe and reliable lane changing can be implemented, thereby improving road traffic efficiency.

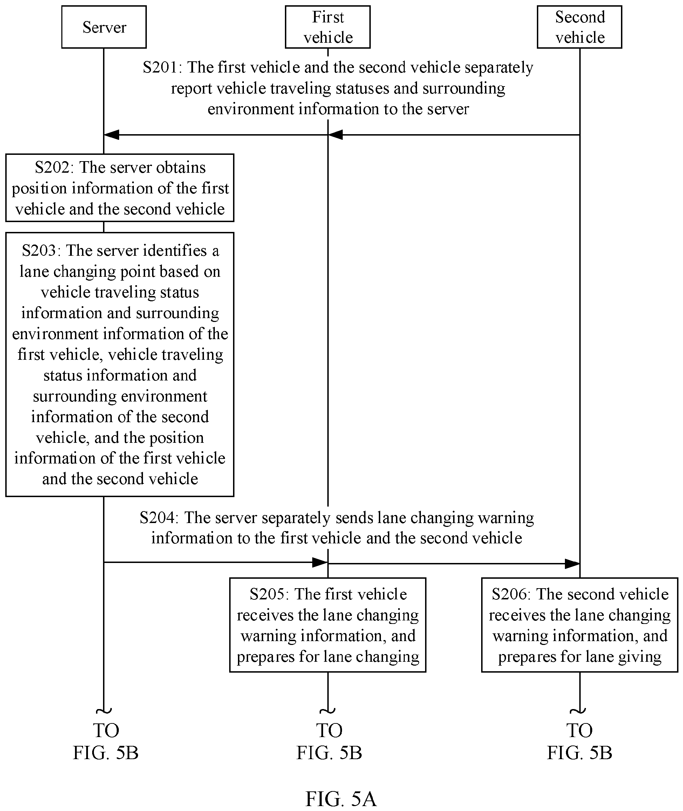

FIG. 5A to FIG. 5C are a schematic flowchart of another vehicle lane changing method according to an embodiment of this application. The method is applied to a scenario such as lane narrowing/lane convergence. For example, the method includes the following steps.

S201: A first vehicle and a second vehicle separately report vehicle traveling statuses and surrounding environment information to a server.

Specifically, the first vehicle obtains a vehicle traveling status and surrounding environment information of the first vehicle, and periodically reports the vehicle traveling status and the surrounding environment information of the first vehicle to the server. The second vehicle also obtains a vehicle traveling status and surrounding environment information of the second vehicle, and periodically reports the vehicle traveling status and the surrounding environment information of the second vehicle to the server. The vehicle traveling status includes a vehicle speed, whether a breakdown occurs, whether oil is sufficient, and the like. The surrounding environment information includes a road/surrounding vehicle/roadblock/slippage/icy surface/another vehicle breakdown or the like identified by the first vehicle. A vehicle usually has an event data recorder or the like, and may obtain surrounding environment information by using a camera in the event data recorder or the like. The surrounding environment information obtained by the vehicle may be a supplement to surrounding environment information obtained by the server.

Correspondingly, the server receives the vehicle traveling status and the surrounding environment information of the first vehicle, and the vehicle traveling status and the surrounding environment information of the second vehicle.

S202: The server obtains position information of the first vehicle and the second vehicle.

The server may identify or obtain the position information of the first vehicle and the second vehicle based on a high-precision map. Alternatively, the first vehicle and the second vehicle may report the position information of the first vehicle and the second vehicle.

S203: The server identifies a lane changing point based on vehicle traveling status information and surrounding environment information of the first vehicle, vehicle traveling status information and surrounding environment information of the second vehicle, and the position information of the first vehicle and the second vehicle.

Specifically, based on one or more pieces of the obtained vehicle traveling status information and surrounding environment information of the first vehicle, vehicle traveling status information and surrounding environment information of the second vehicle, the server may identify the lane changing point, that is, determine, through identification, that the first vehicle needs to perform convergence in front or a lane on which the first vehicle is located is narrowed, and therefore the first vehicle needs to perform lane changing, and identify a fixed lane changing point.

S204: The server separately sends lane changing warning information to the first vehicle and the second vehicle.

The server gives a warning for impending lane changing behavior, and separately sends the lane changing warning information to the first vehicle and the second vehicle. Correspondingly, the first vehicle receives the lane changing warning information, and the second vehicle receives the lane changing warning information. The lane changing warning information includes at least one piece of the following information: information about a distance between the first vehicle and the lane changing point, information about a distance between the second vehicle and the lane changing point, and lane changing time information, the first vehicle and the second vehicle travel on different lanes, and the first vehicle performs, at the lane changing point, lane changing to a lane on which the second vehicle is located.

Specifically, the server gives an advance warning that the first vehicle and the second vehicle are to perform lane changing and combination, and predicts the respective distances of the first vehicle and the second vehicle from the lane changing point and an event that the lane combination may occur after X seconds.

S205: The first vehicle receives the lane changing warning information, and prepares for the lane changing.

Specifically, the first vehicle prepares for the lane changing based on the distance from the lane changing point and the event that the lane combination is to occur after the X seconds, where the distance and the event are prompted for in the lane changing warning information.

S206: The second vehicle receives the lane changing warning information, and prepares for lane giving.

Specifically, if the second vehicle can perform lane giving, the second vehicle prepares for the lane giving based on the distance from the lane changing point and the event that the first vehicle is to perform lane combination after the X seconds, where the distance and the event are prompted for in the lane changing warning information.

S207: The first vehicle sends a first response message to the server.

Specifically, the first vehicle replies with the first response message, to indicate that the first vehicle has received the lane changing warning information and prepared for the lane changing.

Correspondingly, the server receives the first response message.

S208: The second vehicle sends a second response message to the server.

Specifically, the second vehicle replies with the second response message. The second response message may indicate that the second vehicle has received the lane changing warning information and prepared for the lane giving. If the second vehicle currently does not support the lane giving, the second response message may alternatively indicate that the second vehicle does not support the lane giving. Therefore, the server sends lane changing deferring indication information to the first vehicle, to indicate the first vehicle to slow down and start the lane changing after the vehicle on the related lane passes.

Optionally, the second vehicle may receive no lane changing warning information, and therefore send no response message to the server. Therefore, the server considers, by default, that the second vehicle does not support the lane giving at this time, and sends lane changing deferring indication information to the first vehicle, to indicate the first vehicle to slow down and start the lane changing after the vehicle on the related lane passes.

S209: The server generates lane changing indication information.

The server formulates a lane changing policy based on the first response information of the first vehicle, the second response information of the second vehicle, and the respective distances from the lane changing point, vehicle speeds, related-vehicle priorities, and the like of the first vehicle and the second vehicle, and generates the lane changing indication information. The lane changing indication information includes at least one piece of the following information: recommended vehicle speed interval information of the first vehicle and recommended vehicle speed interval information of the second vehicle.

S210: The server separately sends the lane changing indication information to the first vehicle and/or the second vehicle.

Correspondingly, the first vehicle obtains or receives the lane changing indication information, and the second vehicle receives the lane changing indication information.

Alternatively, if the second vehicle sends the second response message to the server after receiving the lane changing warning information, to indicate that the second vehicle does not support the lane giving, or the server receives no response message of the second vehicle, the server sends the lane changing deferring indication information to the first vehicle.

S211: The first vehicle performs lane changing based on the lane changing indication information.

Specifically, the first vehicle travels at a recommended vehicle speed that is of the first vehicle and that is indicated by the lane changing indication information, and performs, at the lane changing point, lane changing to the lane on which the second vehicle is located.

S212: The second vehicle performs lane giving based on the lane changing indication information.

Specifically, the second vehicle travels at a recommended vehicle speed that is of the second vehicle and that is indicated by the lane changing indication information, and performs, at the lane changing point, lane giving to allow the first vehicle to perform lane changing to the lane on which the second vehicle is located.

S213: The first vehicle sends a lane changing result of the first vehicle to the server.

Correspondingly, the server obtains the lane changing result of the first vehicle.

The lane changing result indicates that the first vehicle has completed vehicle speed adjustment and the lane changing by executing the lane changing indication information.

S214: The second vehicle sends a lane changing result of the second vehicle to the server.

Correspondingly, the server obtains the lane changing result of the second vehicle.

The lane changing result indicates that the second vehicle has completed vehicle speed adjustment and the lane giving.

S215: The server determines, through identification based on the lane changing result of the first vehicle and the lane changing result of the second vehicle, that the lane changing succeeds, and separately sends recovery indication information to the first vehicle and the second vehicle.

After the server determines, through identification, that the first vehicle successfully performs lane changing to the lane on which the second vehicle is located, the server separately sends the recovery indication information to the first vehicle and the second vehicle. The recovery indication information includes vehicle speed information and lane information.

Correspondingly, the first vehicle and the second vehicle receive the recovery indication information, the first vehicle adjusts a vehicle speed and continues to travel on the changed lane, and the second vehicle adjusts a vehicle speed and continues to travel on the original lane.

Optionally, the server may determine, through identification based on a video image obtained by the server, that the first vehicle successfully performs lane changing.

S216: The first vehicle recovers, based on the recovery indication information, to a vehicle speed corresponding to the vehicle speed information for traveling, and/or to a lane corresponding to the lane information for traveling.

Specifically, the server indicates the first vehicle to travel at an original vehicle speed or the indicated vehicle speed on the changed lane. For example, the first vehicle travels at a first vehicle speed on a first lane before lane changing, and the first vehicle performs lane changing to a second lane at a second vehicle speed during the lane changing, and after determining, through identification, that the first vehicle successfully performs lane changing, the server indicates the first vehicle to travel at a third vehicle speed on the second lane, where the third vehicle speed may be greater than the second vehicle speed, and the third vehicle speed may be the same as or different from the first vehicle speed.

S217: The second vehicle recovers, based on the recovery indication information, to a vehicle speed corresponding to the vehicle speed information for traveling, and/or to a lane corresponding to the lane information for traveling.

Specifically, the second vehicle is indicated to travel at an original vehicle speed or the indicated vehicle speed on the original lane. For example, the second vehicle travels at a fourth vehicle speed on the second lane before lane giving, and travels at a fifth vehicle speed during the lane giving, and the server may indicate the second vehicle to travel at a sixth vehicle speed after the lane giving, where the sixth vehicle speed is greater than or equal to the fifth vehicle speed, and the sixth vehicle speed may be the same as or different from the fourth vehicle speed.

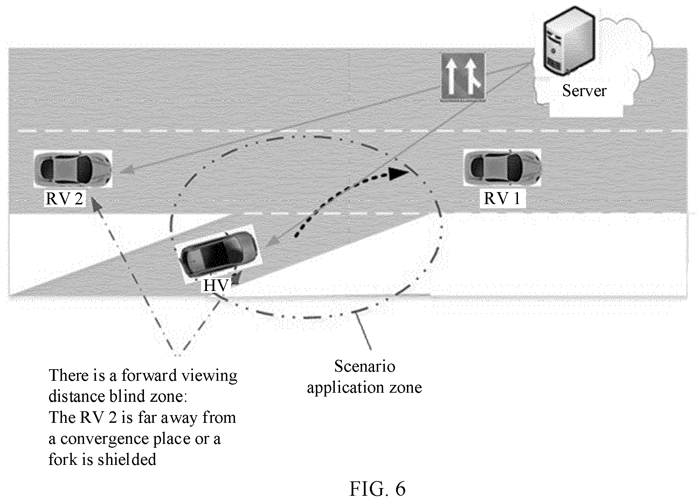

For example, FIG. 6 is a schematic diagram of vehicle lane changing in a lane convergence scenario. A first vehicle HV converges on a lane on which a second vehicle RV 2 is located. The HV and the RV 2 communicate with a server, to report respective vehicle traveling statuses and surrounding environment information. Because the RV 2 is relatively far away from a convergence place or a fork is shielded, the HV obtains a surrounding video image of the RV 2 from the server or the RV 2. The HV and the RV 2 receive lane changing warning information and lane changing indication information of the server, and the HV performs lane changing in a scenario application zone of the HV, to converge on the lane on which the RV 2 is located. After the lane changing, the server sends lane changing recovery indication information to the HV and the RV 2, to indicate the HV and the RV 2 to continue to move at vehicle speeds recovered after the lane changing.

According to the vehicle lane changing method provided in this embodiment of this application, the server performs lane changing decision and indication for the first vehicle and the second vehicle, so that safe and reliable lane changing during lane convergence or lane changing during lane narrowing can be implemented, thereby improving road traffic efficiency.

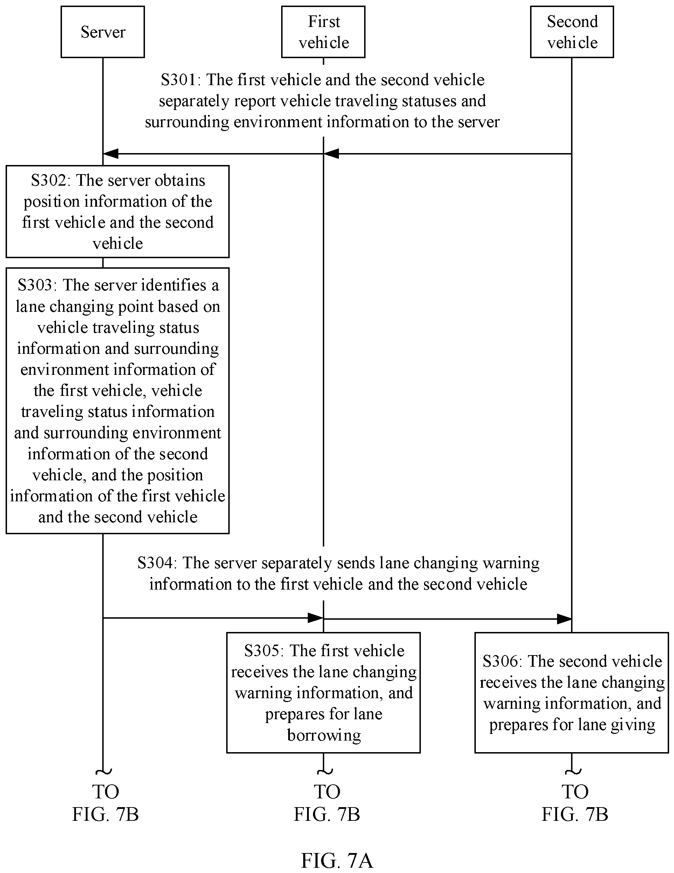

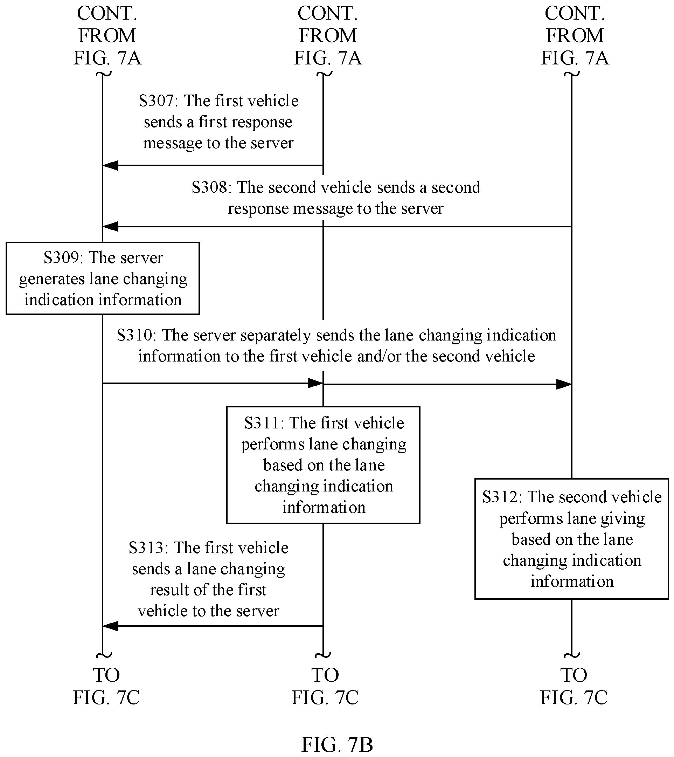

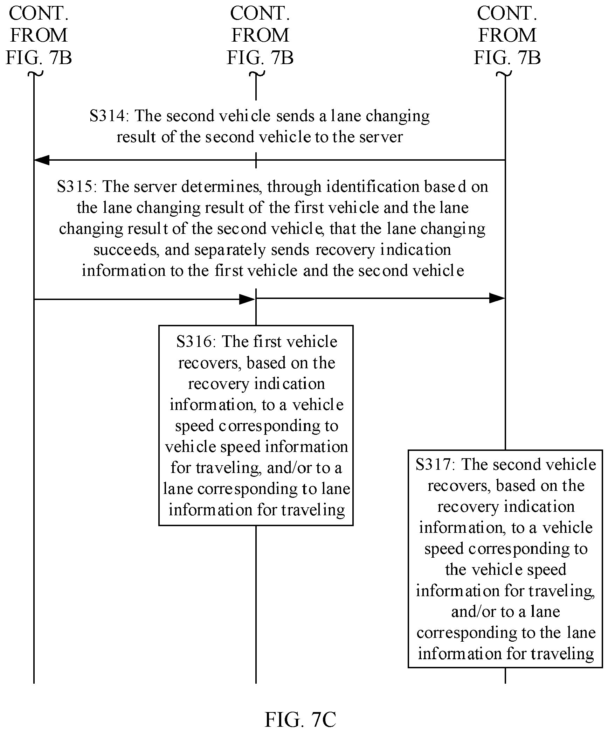

FIG. 7A to FIG. 7C are a schematic flowchart of still another vehicle lane changing method according to an embodiment of this application. The method may be applied to a lane co-directional obstacle bypassing scenario. For example, the method may include the following steps.

S301: A first vehicle and a second vehicle separately report vehicle traveling statuses and surrounding environment information to a server.

For specific implementation of this step, refer to step S201 in the embodiment shown in FIG. 5A.

S302: The server obtains position information of the first vehicle and the second vehicle.

For implementation of this step, refer to step S202 in the embodiment shown in FIG. 5A.

S303: The server identifies a lane changing point based on vehicle traveling status information and surrounding environment information of the first vehicle, vehicle traveling status information and surrounding environment information of the second vehicle, and the position information of the first vehicle and the second vehicle.

For implementation of this step, refer to step S203 in the embodiment shown in FIG. 5A.

S304: The server separately sends lane changing warning information to the first vehicle and the second vehicle.

Correspondingly, the first vehicle receives the lane changing warning information, and the second vehicle receives the lane changing warning information.

The lane changing warning information includes at least one piece of the following information: information about a distance between the first vehicle and the lane changing point, information about a distance between the second vehicle and the lane changing point, and lane changing time information, the first vehicle and the second vehicle travel on different lanes, and the first vehicle performs, at the lane changing point, lane changing to a lane on which the second vehicle is located.

Specifically, the server gives, to the first vehicle and the second vehicle, an advance warning that there is an obstacle in front of the first vehicle, and therefore the first vehicle needs to bypass the obstacle by borrowing the lane on which the second vehicle is located, and predicts the respective distances of the first vehicle and the second vehicle from the lane changing point and an event that lane combination may occur after X seconds.

Optionally, the method may include the following steps: obtaining obliquely-front first vehicle and road information of the first vehicle, where the obliquely-front vehicle and road information of the first vehicle includes at least one piece of the following information: obliquely-front vehicle traveling status information of the first vehicle and obliquely-front obstacle information of the first vehicle; and sending the obliquely-front first vehicle and road information of the first vehicle to the first vehicle and/or an obliquely-front vehicle of the first vehicle. Specifically, because the obstacle shields lines of sight of the first vehicle and a related vehicle, the first vehicle cannot learn the obliquely-front vehicle traveling status information or obstacle information of the first vehicle, and after obtaining the information, the server may send the information to the first vehicle and the related vehicle, so that the first vehicle safely performs lane changing to the neighboring lane to safely bypass the obstacle.

S305: The first vehicle receives the lane changing warning information, and prepares for the lane borrowing.

Specifically, the first vehicle prepares for the lane borrowing based on the distance from the lane changing point and the event that the lane changing is to occur after the X seconds, where the distance and the event are prompted for in the lane changing warning information.

S306: The second vehicle receives the lane changing warning information, and prepares for lane giving.

Specifically, if the second vehicle can perform lane giving, the second vehicle prepares for the lane giving based on the distance from the lane changing point and the event that the first vehicle is to perform lane changing after the X seconds, where the distance and the event are prompted for in the lane changing warning information.

S307: The first vehicle sends a first response message to the server.

Specifically, the first vehicle replies with the first response message, to indicate that the first vehicle has received the lane changing warning information and prepared for the lane borrowing.

Correspondingly, the server receives the first response message.

S308: The second vehicle sends a second response message to the server.

Specifically, the second vehicle replies with the second response message. The second response message may indicate that the second vehicle has received the lane changing warning information and prepared for the lane giving. If the second vehicle currently does not want to perform lane giving, the second response message may alternatively indicate that the second vehicle does not support the lane giving. Therefore, the server sends lane changing deferring indication information to the first vehicle, to indicate the first vehicle to slow down and start the lane borrowing after the vehicle on the related lane passes.

Optionally, the second vehicle may receive no lane changing warning information, and therefore send no response message to the server. Therefore, the server considers, by default, that the second vehicle does not support the lane giving at this time, and sends lane changing deferring indication information to the first vehicle, to indicate the first vehicle to slow down and start the lane borrowing after the vehicle on the related lane passes.

S309: The server generates lane changing indication information.

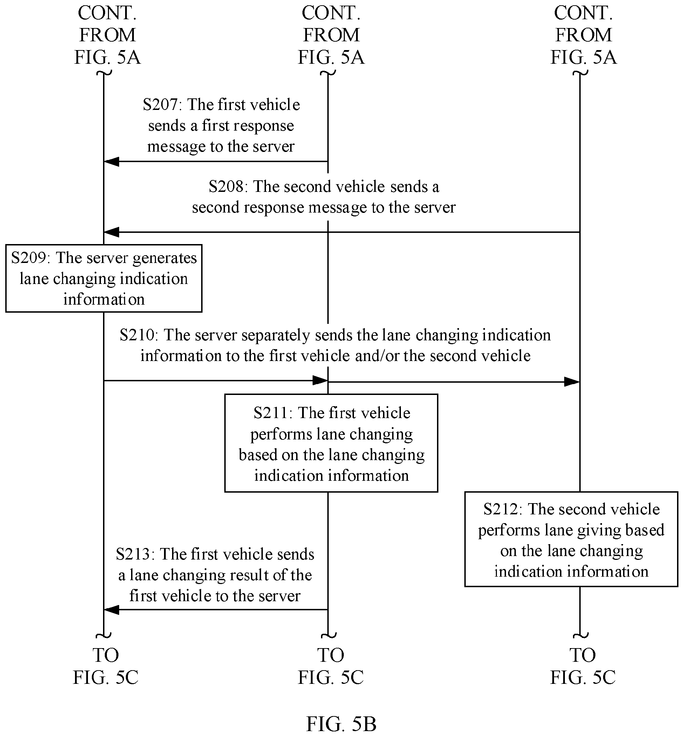

For specific implementation of this step, refer to step S209 in the embodiment shown in FIG. 5B.

S310: The server separately sends the lane changing indication information to the first vehicle and/or the second vehicle.

Correspondingly, the first vehicle obtains or receives the lane changing indication information, and the second vehicle receives the lane changing indication information.

For specific implementation of this step, refer to step S210 in the embodiment shown in FIG. 5B.

S311: The first vehicle performs lane changing based on the lane changing indication information.

Specifically, the first vehicle travels at a recommended vehicle speed that is of the first vehicle and that is indicated by the lane changing indication information, and performs, at the lane changing point, lane changing to the lane on which the second vehicle is located, to bypass the obstacle.

S312: The second vehicle performs lane giving based on the lane changing indication information.

For specific implementation of this step, refer to step S212 in the embodiment shown in FIG. 5B.

S313: The first vehicle sends a lane changing result of the first vehicle to the server.

Correspondingly, the server obtains the lane changing result of the first vehicle.

The lane changing result indicates that the first vehicle has completed vehicle speed adjustment and the lane changing by executing the lane changing indication information, and specifically indicates that the first vehicle successfully performs lane borrowing, that is, successfully bypasses the obstacle.

S314: The second vehicle sends a lane changing result of the second vehicle to the server.

Correspondingly, the server obtains the lane changing result of the second vehicle.

The lane changing result indicates that the second vehicle has completed vehicle speed adjustment and the lane changing by executing the lane changing indication information.

S315: The server determines, through identification based on the lane changing result of the first vehicle and the lane changing result of the second vehicle, that the lane changing succeeds, and separately sends recovery indication information to the first vehicle and the second vehicle.

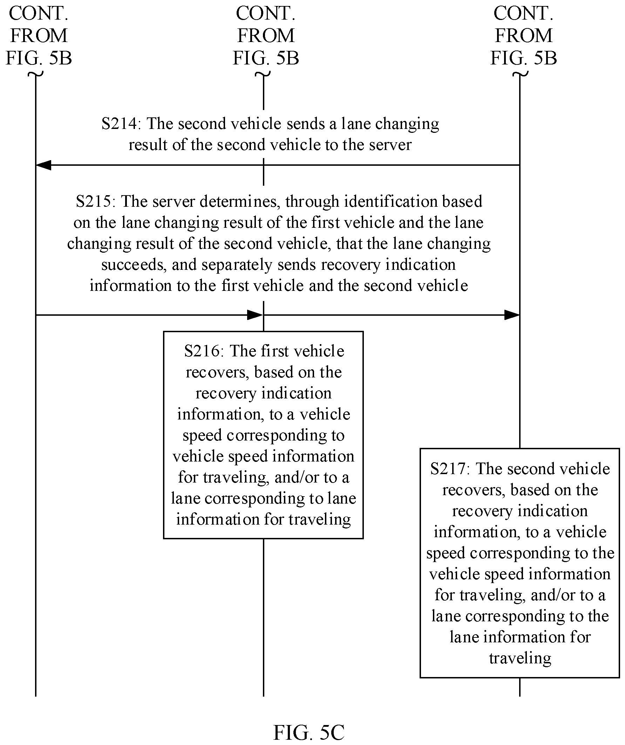

For specific implementation of this step, refer to step S215 in the embodiment shown in FIG. 5C.

S316: The first vehicle recovers, based on the recovery indication information, to a vehicle speed corresponding to vehicle speed information for traveling, and/or to a lane corresponding to lane information for traveling.

For specific implementation of this step, refer to step S216 in the embodiment shown in FIG. 5C.

S317: The second vehicle recovers, based on the recovery indication information, to a vehicle speed corresponding to the vehicle speed information for traveling, and/or to a lane corresponding to the lane information for traveling.

For specific implementation of this step, refer to step S217 in the embodiment shown in FIG. 5C.

The server sends the recovery indication information to the first vehicle and the second vehicle when determining, through identification with reference to a high-precision map, that the original lanes are passable. Correspondingly, the first vehicle and the second vehicle receive the recovery indication information, the first vehicle adjusts a vehicle speed and continues to travel on the changed lane, and the second vehicle adjusts a vehicle speed and continues to travel on the original lane.

Optionally, after the first vehicle bypasses the obstacle and before the first vehicle recovers to the original lane for traveling, the method further includes: obtaining front second vehicle and road information of the lane on which the obstacle is located; and sending the front second vehicle and road information of the lane on which the obstacle is located to the first vehicle. The server sends the front second vehicle and road information of the lane on which the obstacle is located to the first vehicle, so that the first vehicle can safely recover to the original lane for traveling.

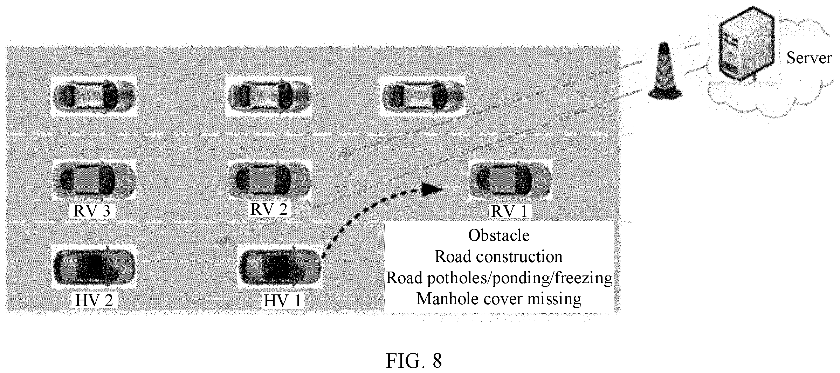

For example, FIG. 8 is a schematic diagram in which a lane obstacle has not been bypassed in a same direction. An HV 1 travels in a same direction as an RV 1 and an RV 2, and there is an obstacle in the front of a lane on which the HV 1 is located, and therefore the HV 1 needs to bypass the obstacle by borrowing a lane on which the RV 2 is located. A server draws a lane application zone by using the obstacle as a start point, determines that the HV 1 needs to perform co-directional obstacle bypassing, and performs lane changing negotiation and indication for the HV 1 and the RV 2. When the server sends lane changing warning information to the HV 1 and the RV 1, the server can capture a traveling status of the obliquely-front RV 1 of the HV 1 in real time, and deliver a captured video image to the HV 1. The HV 1 and the RV 2 perform lane changing based on lane changing indication information of the server.

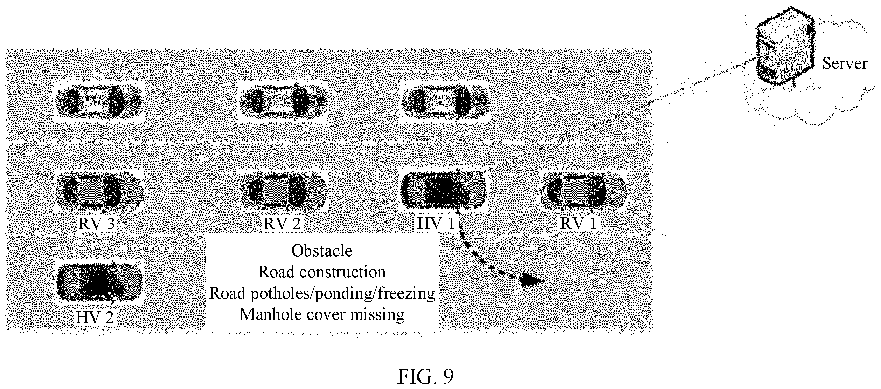

FIG. 9 is a schematic diagram in which a lane obstacle has been bypassed in a same direction. An HV 1 successfully performs lane borrowing to successfully bypass an obstacle. A server determines, through identification based on a high-precision map, that the front of a lane on which the obstacle is located is idle, and receives lane changing results of the HV 1 and an RV 1. The server sends recovery indication information to the HV 1, to indicate the HV 1 to perform lane changing to the original lane at a recommended vehicle and continue to move. In addition, the server can capture, in real time, an obliquely-front video image of the HV 1, that is, a front video image of the lane on which the obstacle is located, and deliver the captured video image to the HV 1. The HV 1 determines, through identification, that the front of the lane on which the obstacle is located is idle, executes the recovery indication information to recover to the original lane and moves at a vehicle speed recommended by the server.

According to the vehicle lane changing method provided in this embodiment of this application, the server performs lane changing decision and indication for the first vehicle and the second vehicle, so that safe and reliable co-directional obstacle bypassing can be implemented, thereby improving road traffic efficiency.

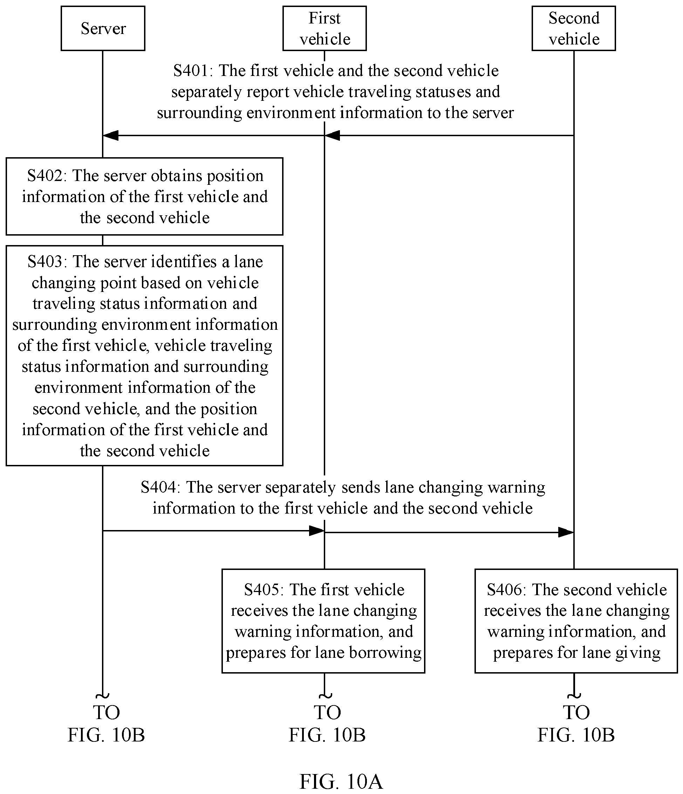

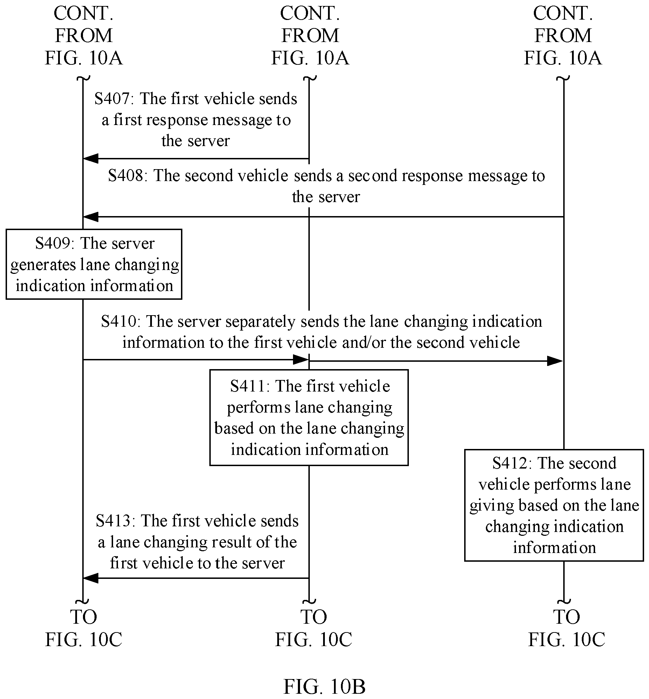

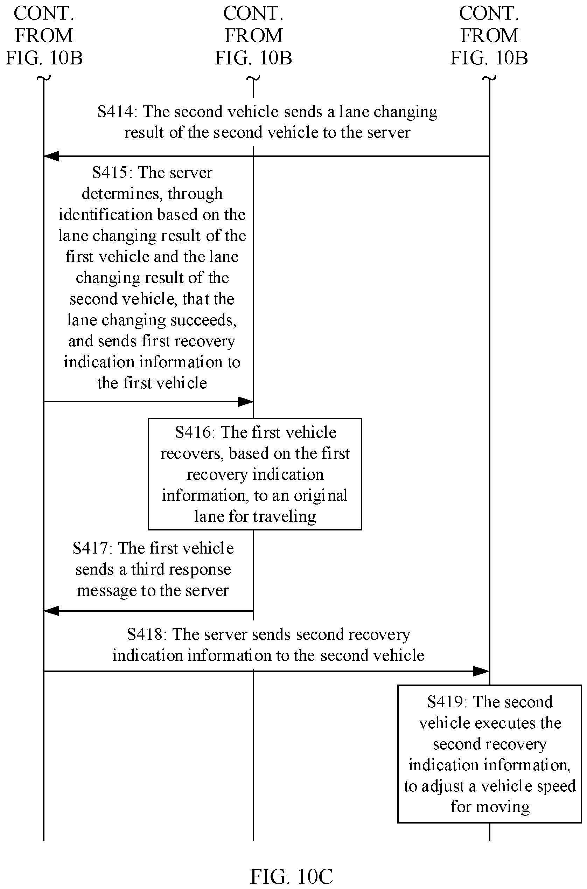

FIG. 10A to FIG. 10C are a schematic flowchart of yet another vehicle lane changing method according to an embodiment of this application. The method may be applied to a lane contra-directional obstacle bypassing scenario. For example, the method may include the following steps.

S401: A first vehicle and a second vehicle separately report vehicle traveling statuses and surrounding environment information to a server.

S402: The server obtains position information of the first vehicle and the second vehicle.

S403: The server identifies a lane changing point based on vehicle traveling status information and surrounding environment information of the first vehicle, vehicle traveling status information and surrounding environment information of the second vehicle, and the position information of the first vehicle and the second vehicle.

S404: The server separately sends lane changing warning information to the first vehicle and the second vehicle.

Correspondingly, the first vehicle receives the lane changing warning information, and the second vehicle receives the lane changing warning information.

S405: The first vehicle receives the lane changing warning information, and prepares for lane borrowing.

S406: The second vehicle receives the lane changing warning information, and prepares for lane giving.

S407: The first vehicle sends a first response message to the server.

Correspondingly, the server receives the first response message.

S408: The second vehicle sends a second response message to the server.

S409: The server generates lane changing indication information.

S410: The server separately sends the lane changing indication information to the first vehicle and/or the second vehicle.

Correspondingly, the first vehicle obtains or receives the lane changing indication information, and the second vehicle receives the lane changing indication information.

S411: The first vehicle performs lane changing based on the lane changing indication information.

S412: The second vehicle performs lane giving based on the lane changing indication information.

S413: The first vehicle sends a lane changing result of the first vehicle to the server.

Correspondingly, the server obtains the lane changing result of the first vehicle.

S414: The second vehicle sends a lane changing result of the second vehicle to the server.

Correspondingly, the server obtains the lane changing result of the second vehicle.

S415: The server determines, through identification based on the lane changing result of the first vehicle and the lane changing result of the second vehicle, that the lane changing succeeds, and sends first recovery indication information to the first vehicle.

S416: The first vehicle recovers, based on the first recovery indication information, to an original lane for traveling.

S417: The first vehicle sends a third response message to the server.

The third response message indicates that the first vehicle has recovered to the original lane for driving.

S418: The server sends second recovery indication information to the second vehicle.

S419: The second vehicle executes the second recovery indication information, to adjust a vehicle speed for moving.

A difference between this embodiment and the co-directional obstacle bypassing for traveling shown in FIG. 7A to FIG. 7C is that only when the first vehicle bypasses the obstacle and recovers to the original lane for traveling, the second vehicle and another affected vehicle can adjust vehicle speeds for moving. That is, a difference between this embodiment and the embodiment shown in FIG. 7A to FIG. 7C is that step S417 is further included. After recovering to the original lane for traveling, the first vehicle sends the third response message to the server, and only after receiving the third response message, the server sends the second recovery indication information to the second vehicle. For the other steps, correspondingly refer to the embodiment shown in FIG. 5A to FIG. 5C or the embodiment shown in FIG. 7A to FIG. 7C. Details are not described herein again.

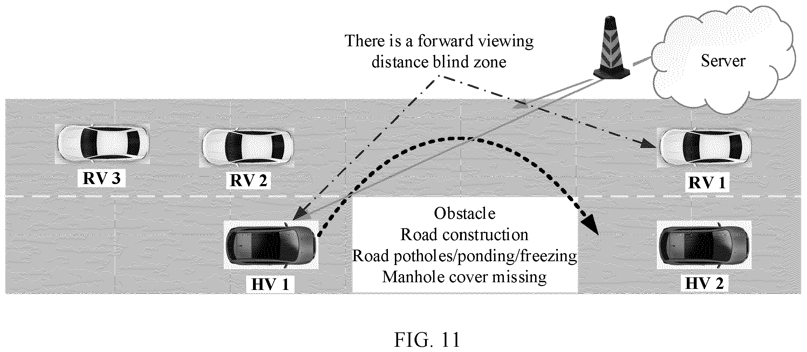

For example, FIG. 11 is a schematic diagram in which a lane obstacle has not been bypassed in an opposite direction. An HV 1 travels in an opposite direction to an RV 1 and an RV 2, and there is an obstacle on a lane on which the HV 1 is located, and therefore the HV 1 needs to bypass the obstacle by borrowing a neighboring lane on which the RV 1 and the RV 2 are located. A server identifies the lane on which the obstacle is located and the neighboring lane based on vehicle traveling statuses and surrounding environment information that are reported by the HV 1 and the RV 2 and with reference to a high-precision map; determines an impact range of the lane on which the obstacle is located, that is, a scenario application range of the HV 1; and delivers captured video images of the obliquely-front RV 1 of the HV 1 and the obstacle to the HV 1, and also delivers videos of the obliquely-front HV 1 of the RV 1 and the obstacle to the RV 1. That is, a video captured near a forward viewing distance blind zone due to the obstacle is delivered to a vehicle on a related contra-directional lane. In addition, the server performs lane changing coordination and indication for the HV 1 and the RV 2, to indicate the HV 1 and the RV 2 to travel at recommended vehicle speeds.

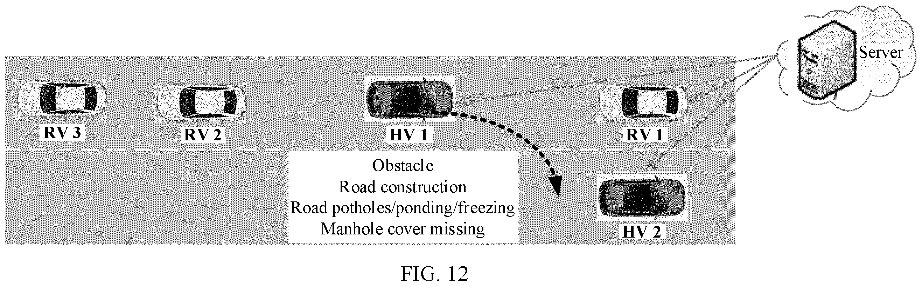

FIG. 12 is a schematic diagram in which a lane obstacle has been bypassed in an opposite direction. If determining, through identification based on a lane changing result of an HV 1 and a high-precision map, that the front of a lane on which an obstacle is located is idle, a server delivers a front video of the lane on which the obstacle is located to the HV 1. The server performs lane changing negotiation and indication for the HV 1, an HV 2, and an RV 1, and sends recovery indication information to the HV 1. The HV 1 performs lane changing to a front lane of the obstacle for traveling. After receiving a response message that the HV 1 successfully performs lane changing, the server indicates an RV 2 to recover to an original vehicle speed for traveling.

According to the vehicle lane changing method provided in this embodiment of this application, the server performs lane changing decision and indication for the first vehicle and the second vehicle, so that safe and reliable contra-directional obstacle bypassing can be implemented, thereby improving road traffic efficiency.

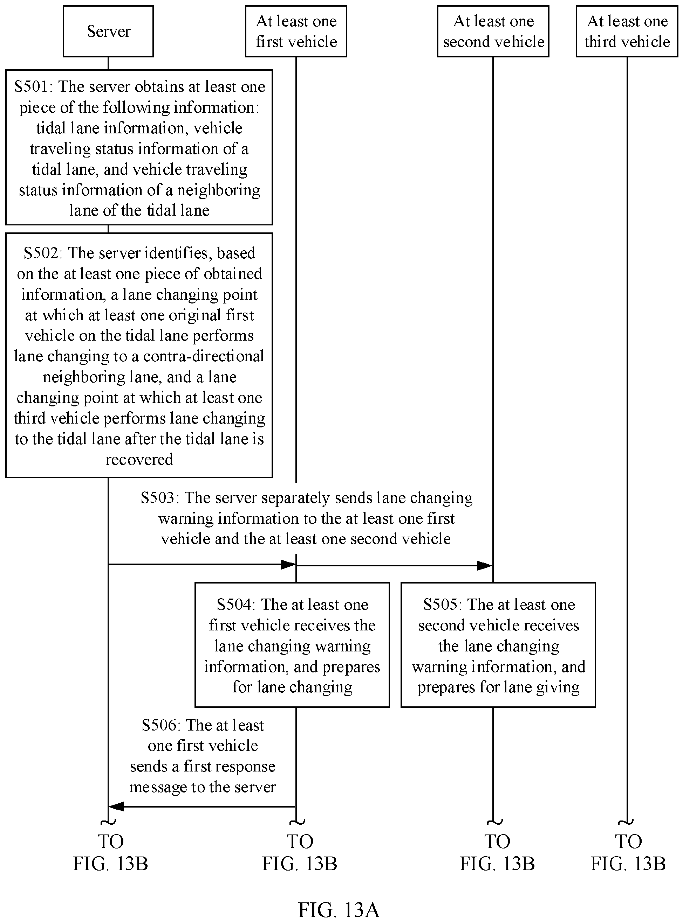

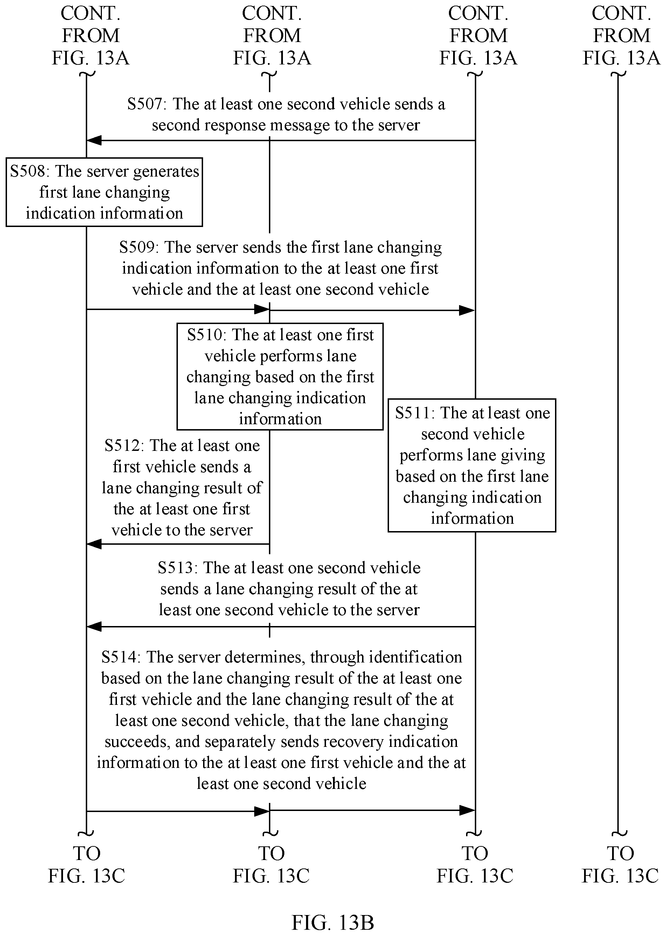

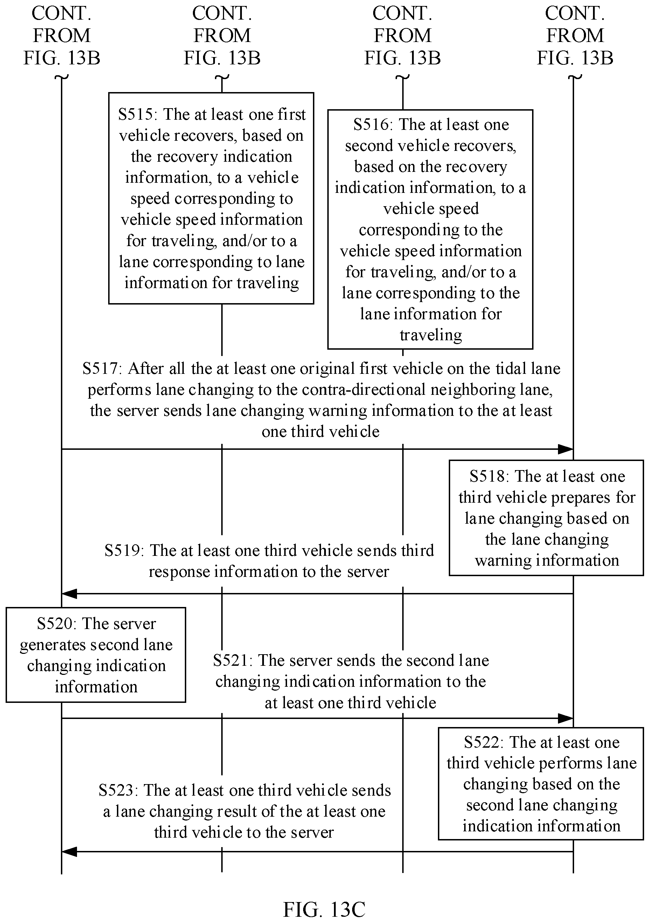

FIG. 13A to FIG. 13C are a schematic flowchart of still yet another vehicle lane changing method according to an embodiment of this application. The method may be applied to a tidal lane changing/recovery scenario. For example, the method may include the following steps.

S501: A server obtains at least one piece of the following information: tidal lane information, vehicle traveling status information of a tidal lane, and vehicle traveling status information of a neighboring lane of the tidal lane.

Specifically, to identify a lane changing point of the tidal lane, at least one piece of the following information needs to be first obtained: the tidal lane information, the vehicle traveling status information of the tidal lane, or vehicle traveling status information of a neighboring lane of the tidal lane. The server may obtain the information, or may receive vehicle traveling status information reported by vehicles on the tidal lane and the neighboring lane. The tidal lane information includes current direction information of the tidal lane, lane changing time information, a current vehicle congestion status of the tidal lane, and the like. Because all current vehicles on the tidal lane need to perform lane changing to the neighboring lane, the vehicle traveling status information of the neighboring lane of the tidal lane further needs to be obtained.

S502: The server identifies, based on the at least one piece of obtained information, a lane changing point at which at least one original first vehicle on the tidal lane performs lane changing to a contra-directional neighboring lane, and a lane changing point at which at least one third vehicle performs lane changing to the tidal lane after the tidal lane is recovered.

Tidal lane changing is divided into two processes: A current vehicle on a tidal lane performs lane changing to a co-directional neighboring lane, and a vehicle on a lane that is in an opposite direction and adjacent to the tidal lane performs lane changing to the tidal lane. Therefore, the server needs to identify, based on the at least one piece of information, the lane changing point at which the at least one original first vehicle on the tidal lane performs lane changing to the contra-directional neighboring lane, and the lane changing point at which the at least one third vehicle performs lane changing to the tidal lane after the tidal lane is recovered. The at least one first vehicle performs lane changing through lane borrowing from at least one second vehicle on the contra-directional neighboring lane.

The server may further identify, based on a quantity of current vehicles on the tidal lane and quantities of vehicles on co-directional and contra-directional neighboring lanes, whether lane changing currently needs to be performed.

S503: The server separately sends lane changing warning information to the at least one first vehicle and the at least one second vehicle.

Correspondingly, the at least one first vehicle receives the lane changing warning information, and the at least one second vehicle receives the lane changing warning information.

First, a lane changing warning that the current vehicle on the tidal lane is to perform lane changing to the neighboring lane. For the tidal lane changing, one or more current vehicles on the tidal lane need to simultaneously or sequentially perform lane changing to the neighboring lane. Therefore, one or more second vehicles may perform lane giving.

The lane changing warning information includes at least one piece of the following information: information about a distance between the first vehicle and the lane changing point, information about a distance between the second vehicle and the lane changing point, and lane changing time information, the first vehicle and the second vehicle travel on different lanes, and the first vehicle performs, at the lane changing point, lane changing to the lane on which the second vehicle is located.

Specifically, the server gives an advance warning that the first vehicle and the second vehicle are to perform tidal lane changing, and predicts the respective distances of the first vehicle and the second vehicle from the lane changing point and an event that the lane changing may occur after X seconds.

S504: The at least one first vehicle receives the lane changing warning information, and prepares for the lane changing.

Specifically, the at least one first vehicle travels at a recommended vehicle speed that is of the at least one first vehicle and that is indicated by the lane changing indication information, and performs, at the lane changing point, lane changing to the lane on which the at least one second vehicle is located.

S505: The at least one second vehicle receives the lane changing warning information, and prepares for lane giving.

Specifically, the at least one second vehicle travels at a recommended vehicle speed that is of the at least one second vehicle and that is indicated by the lane changing indication information, and performs, at the lane changing point, lane giving to allow the at least one first vehicle to perform lane changing to the lane on which the at least one second vehicle is located.

S506: The at least one first vehicle sends a first response message to the server.

Specifically, the first vehicle replies with the first response message, to indicate that the first vehicle has received the lane changing warning information and prepared for the lane changing.

Correspondingly, the server receives the first response message.

S507: The at least one second vehicle sends a second response message to the server.

Specifically, the second vehicle replies with the second response message. The second response message may indicate that the second vehicle has received the lane changing warning information and prepared for the lane giving. If the second vehicle currently does not support the lane giving, the second response message may alternatively indicate that the second vehicle does not support the lane giving. Therefore, the server sends lane changing deferring indication information to the first vehicle, to indicate the first vehicle to slow down and start the lane changing after the vehicle on the related lane passes.

Optionally, the second vehicle may receive no lane changing warning information, and therefore send no response message to the server. Therefore, the server considers, by default, that the second vehicle does not support the lane giving at this time, and sends lane changing deferring indication information to the first vehicle, to indicate the first vehicle to slow down and start the lane changing after the vehicle on the related lane passes.

S508: The server generates first lane changing indication information.

The server formulates a lane changing policy based on the first response information of the at least one first vehicle, the second response information of the at least one second vehicle, and the respective distances from the lane changing point, vehicle speeds, related-vehicle priorities, and the like of the at least one first vehicle and the at least one second vehicle, and generates the first lane changing indication information. The first lane changing indication information includes at least one piece of the following information: recommended vehicle speed interval information of the at least one first vehicle and recommended vehicle speed interval information of the at least one second vehicle.

S509: The server sends the first lane changing indication information to the at least one first vehicle and the at least one second vehicle, where the first lane changing indication information is used to indicate the at least one original first vehicle on the tidal lane to perform lane changing to the contra-directional neighboring lane.

Correspondingly, the at least one original first vehicle on the tidal lane receives the first lane changing indication information.

S510: The at least one first vehicle performs lane changing based on the first lane changing indication information.

S511: The at least one second vehicle performs lane giving based on the first lane changing indication information.

S512: The at least one first vehicle sends a lane changing result of the at least one first vehicle to the server.

Correspondingly, the server obtains the lane changing result of the at least one first vehicle.

The lane changing result indicates that the at least one first vehicle has completed vehicle speed adjustment and the lane changing by executing the lane changing indication information.

S513: The at least one second vehicle sends a lane changing result of the at least one second vehicle to the server.

Correspondingly, the server obtains the lane changing result of the at least one second vehicle.

S514: The server determines, through identification based on the lane changing result of the at least one first vehicle and the lane changing result of the at least one second vehicle, that the lane changing succeeds, and separately sends recovery indication information to the at least one first vehicle and the at least one second vehicle.

The recovery indication information includes vehicle speed information and lane information.

S515: The at least one first vehicle recovers, based on the recovery indication information, to a vehicle speed corresponding to the vehicle speed information for traveling, and/or to a lane corresponding to the lane information for traveling.

S516: The at least one second vehicle recovers, based on the recovery indication information, to a vehicle speed corresponding to the vehicle speed information for traveling, and/or to a lane corresponding to the lane information for traveling.

Correspondingly, the at least one first vehicle and the at least one second vehicle receive the recovery indication information, the at least one first vehicle adjusts a vehicle speed and continues to travel on the changed lane, and the at least one second vehicle adjusts a vehicle speed and continues to travel on the original lane.

For specific lane changing operations in S504 to S516, refer to the corresponding steps in the foregoing embodiments. Details are not described herein again.

After the current vehicle on the tidal lane performs lane changing to the neighboring lane, a direction of the tidal lane is changed, and the following operations in which some vehicles on a neighboring lane on the other side of the tidal lane perform lane changing to the tidal lane are performed, to relieve traffic pressure of the neighboring lane:

S517: After all the at least one original first vehicle on the tidal lane performs lane changing to the contra-directional neighboring lane, the server sends lane changing warning information to the at least one third vehicle.

S518: The at least one third vehicle prepares for lane changing based on the lane changing warning information.

S519: The at least one third vehicle sends third response information to the server.

Correspondingly, the server receives the third response information sent by the at least one third vehicle.

S520: The server generates second lane changing indication information.

S521: The server sends the second lane changing indication information to the at least one third vehicle, where the second lane changing indication information is used to indicate the at least one third vehicle to perform lane changing to the tidal lane.

S522: The at least one third vehicle performs lane changing based on the second lane changing indication information.

S523: The at least one third vehicle sends a lane changing result of the at least one third vehicle to the server.

For a process in which the at least one third vehicle performs lane changing to the tidal lane in S517 to S523, refer to the corresponding steps in the foregoing embodiments. A difference is that because all original vehicles on the tidal lane have performed lane changing to the neighboring lane, the at least one third vehicle can perform lane changing to the tidal lane at a recommended vehicle speed, without vehicle lane giving on the tidal lane. Certainly, another vehicle on the lane on which the at least one third vehicle is originally located may also adjust a vehicle speed, to perform lane giving for the at least one third vehicle.

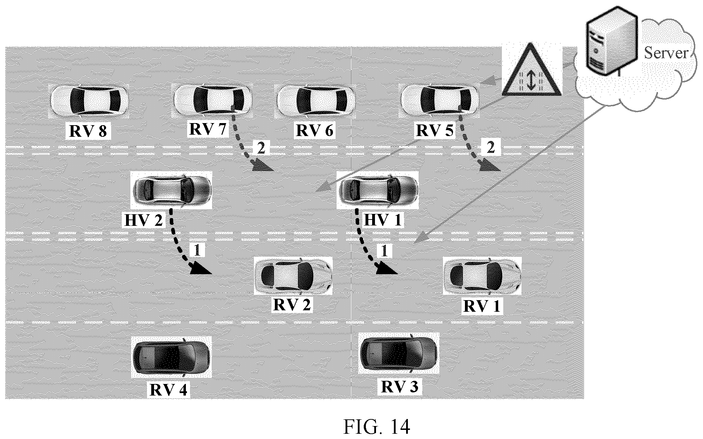

For example, FIG. 14 is a schematic diagram of tidal lane changing/recovery. Originally, a lane 1 and a lane 2 are co-directional lanes, and a lane 3 and a lane 4 are contra-directional lanes of the lane 1 and the lane 2. When there are a few vehicles in directions of the lane 1 and the lane 2, the lane 2 may be used as a tidal lane for a contra-directional vehicle. Currently, an HV 1 and an HV 2 travel on the tidal lane, travel in a same direction as an RV 1 and an RV 2 that travel on the lane 3 and an RV 3 and an RV 4 that travel on the lane 4, and travel in an opposite direction to vehicles RV 5 to RV 8. The lane changing is divided into two steps: In a first step, if determining, through identification based on tidal lane information, vehicle traveling status information of the tidal lane, vehicle traveling status information of neighboring lanes of the tidal lane, and the like, that there are fewer vehicles on the lane 3 and the lane 4 and there are more vehicles on the lane 1, a server indicates the HV 1 and the HV 2 to perform lane changing to the lane 3 for traveling. In a second step, if determining, through identification based on a high-precision map and lane changing results of the HV 1 and the HV 2, that the vehicles on the lane 2 have performed lane changing, the server indicates the RV 5 and the RV 7 on the lane 1 to perform lane changing to the lane 2.

According to the vehicle lane changing method provided in this embodiment of this application, the server performs lane changing decision and indication for the first vehicle and the second vehicle, so that safe and reliable lane changing and recovery can be implemented in the tidal lane changing scenario, thereby improving road traffic efficiency.

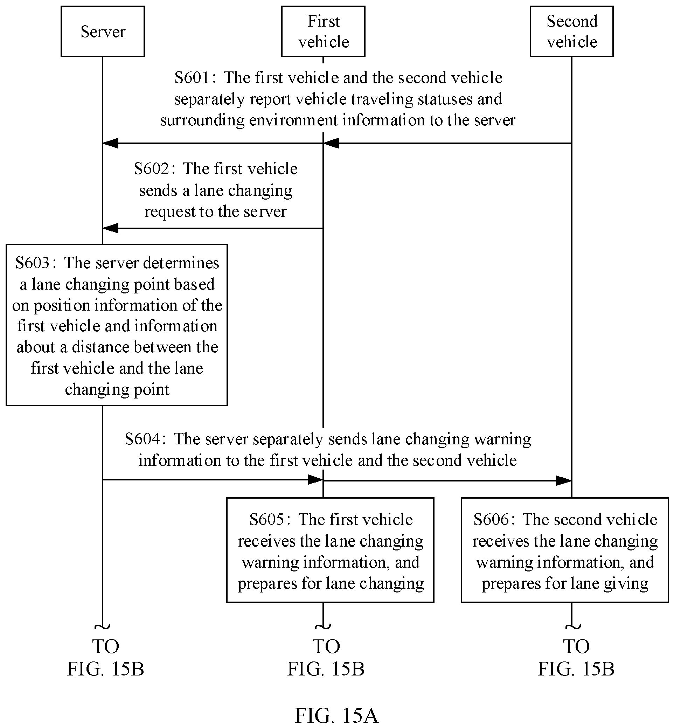

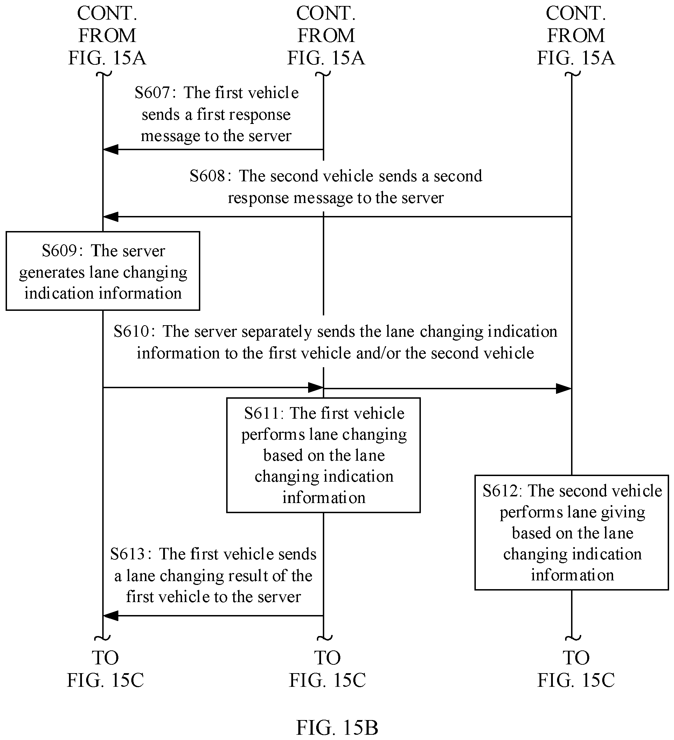

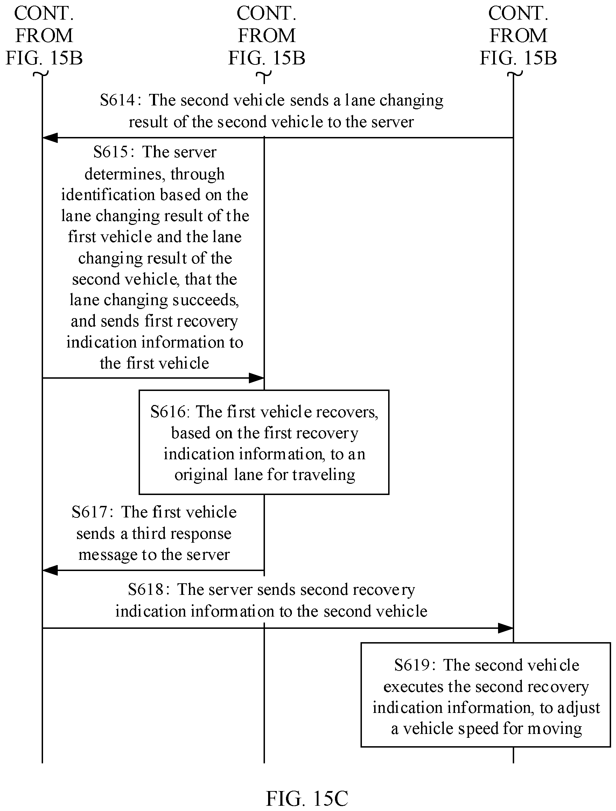

FIG. 15A to FIG. 15C are a schematic flowchart of a further vehicle lane changing method according to an embodiment of this application. The method may be applied to an active lane changing scenario. For example, the method may include the following steps.

S601: A first vehicle and a second vehicle separately report vehicle traveling statuses and surrounding environment information to a server.

S602: The first vehicle sends a lane changing request to the server.

Correspondingly, the server receives the lane changing request.

Specifically, after obtaining the vehicle traveling statuses and the surrounding environment information of the vehicles, the server may also broadcast the vehicle traveling statuses and the surrounding environment information to related vehicles. If wanting, based on an obtained vehicle traveling status and obtained surrounding environment information of a front vehicle, a vehicle speed of the first vehicle, and the like, to perform lane changing to overtake the front vehicle, the first vehicle may send the lane changing request to the server. The lane changing request includes information about a distance between the first vehicle and a lane changing point.

S603: The server determines the lane changing point based on position information of the first vehicle and the information about the distance between the first vehicle and the lane changing point.

The server determines the lane changing point based on the position information that is of the first vehicle and that is identified based on a map and the information that is about the distance between the first vehicle and the lane changing point and that is carried in the change request. Certainly, the lane changing request may also carry the position information of the first vehicle.

S604: The server separately sends lane changing warning information to the first vehicle and the second vehicle.

Correspondingly, the first vehicle receives the lane changing warning information, and the second vehicle receives the lane changing warning information.

S605: The first vehicle receives the lane changing warning information, and prepares for lane changing.

S606: The second vehicle receives the lane changing warning information, and prepares for lane giving.

S607: The first vehicle sends a first response message to the server.

Correspondingly, the server receives the first response message.

S608: The second vehicle sends a second response message to the server.

S609: The server generates lane changing indication information.

S610: The server separately sends the lane changing indication information to the first vehicle and/or the second vehicle.

Correspondingly, the first vehicle obtains or receives the lane changing indication information, and the second vehicle receives the lane changing indication information.

S611: The first vehicle performs lane changing based on the lane changing indication information.

S612: The second vehicle performs lane giving based on the lane changing indication information.

S613: The first vehicle sends a lane changing result of the first vehicle to the server.

Correspondingly, the server obtains the lane changing result of the first vehicle.

S614: The second vehicle sends a lane changing result of the second vehicle to the server.

Correspondingly, the server obtains the lane changing result of the second vehicle.

S615: The server determines, through identification based on the lane changing result of the first vehicle and the lane changing result of the second vehicle, that the lane changing succeeds, and sends first recovery indication information to the first vehicle.

S616: The first vehicle recovers, based on the first recovery indication information, to an original lane for traveling.

S617: The first vehicle sends a third response message to the server.

The third response message indicates that the first vehicle has recovered to the original lane for driving.

S618: The server sends second recovery indication information to the second vehicle.

S619: The second vehicle executes the second recovery indication information, to adjust a vehicle speed for moving.

For the steps that are not described in detail, refer to the related steps in the foregoing embodiments. Details are not described herein again.

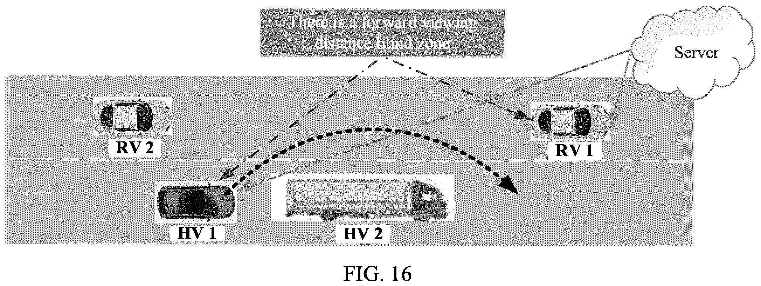

FIG. 16 is a schematic diagram in which a vehicle has not actively performed lane changing. There is a slowly-traveling large truck HV 2 in front of an HV 1. The HV 1 wants to overtake the HV 2. The HV 1 receives a vehicle traveling status and surrounding environment information that are of a neighboring lane and that are sent by a server, and if finding that the neighboring lane has a lane changing point at which lane changing can be performed, the HV 1 sends a lane changing request to the server, to give a prediction that the HV 1 is to perform lane changing to the neighboring lane at a specific lane changing point.

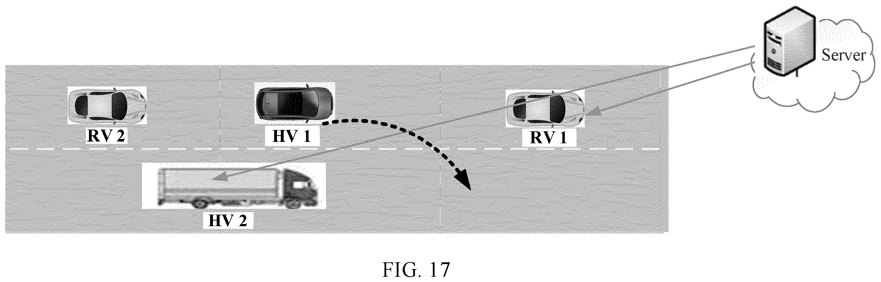

FIG. 17 is a schematic diagram in which a vehicle recovers to an original lane after actively performing lane changing. If successfully performing lane changing to a neighboring lane and then wanting to recover to an original lane for driving, an HV 1 obtains vehicle traveling status information of a front vehicle on the current lane and traveling status information of a front vehicle of the HV 2 on the original lane, and the HV 1 performs lane changing to the original lane for driving.

According to the vehicle lane changing method provided in this embodiment of this application, the server performs lane changing decision and indication for the first vehicle and the second vehicle, so that safe and reliable lane changing can be implemented, thereby improving road traffic efficiency.

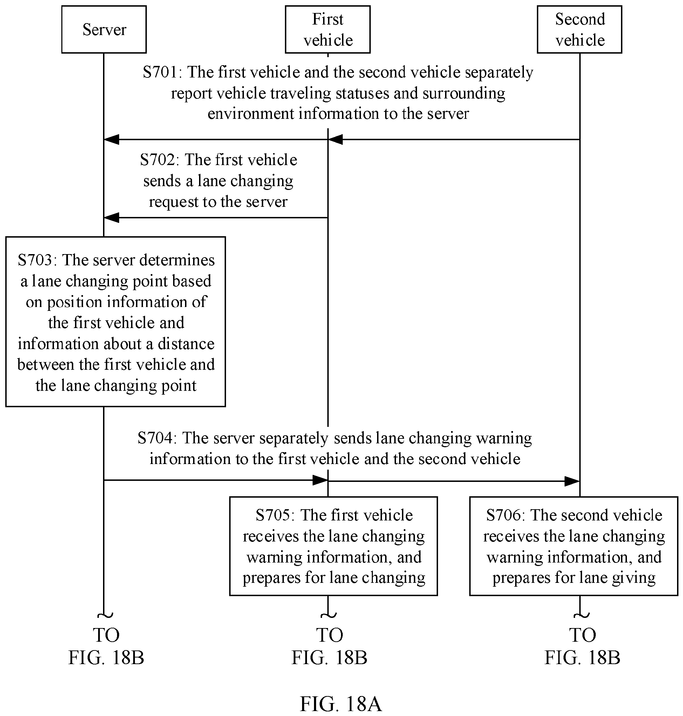

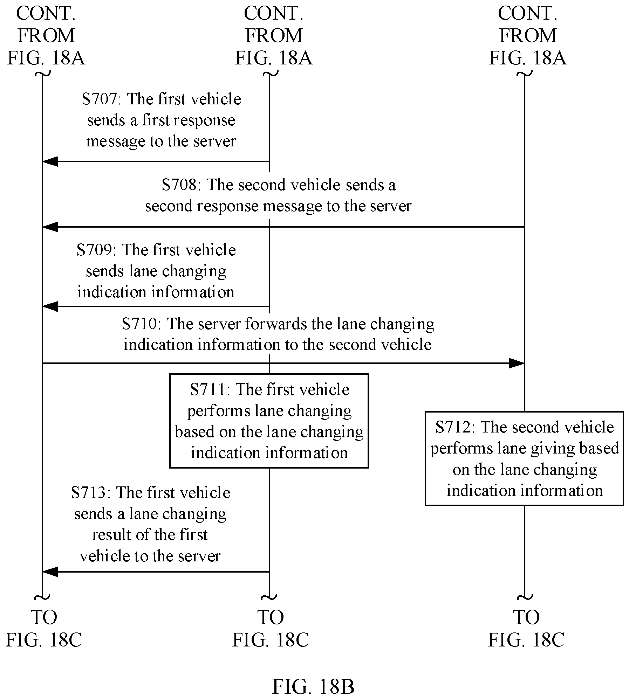

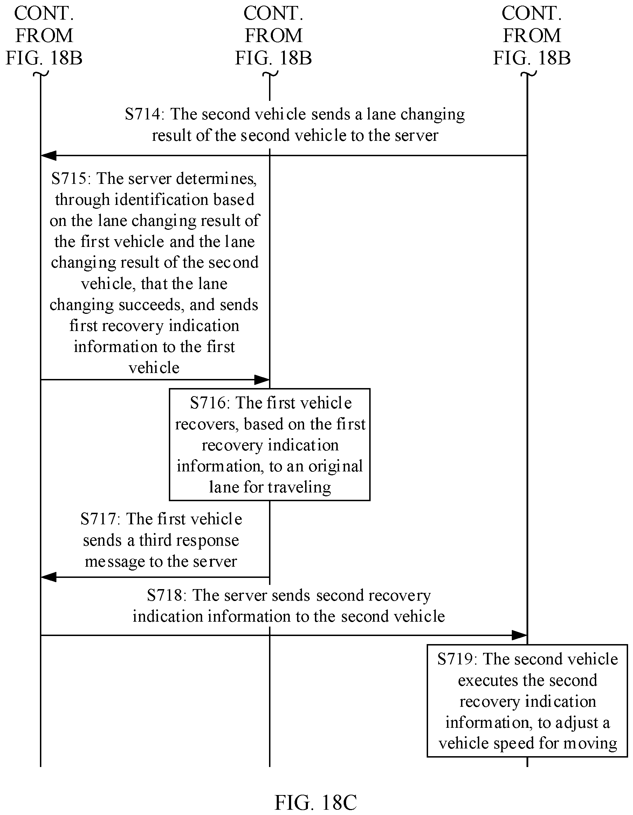

FIG. 18A to FIG. 18C are a schematic flowchart of a still further vehicle lane changing method according to an embodiment of this application. The method may be applied to an active lane changing scenario. For example, the method may include the following steps.

S701: A first vehicle and a second vehicle separately report vehicle traveling statuses and surrounding environment information to a server.

S702: The first vehicle sends a lane changing request to the server.

Correspondingly, the server receives the lane changing request.

Specifically, after obtaining the vehicle traveling statuses and the surrounding environment information of the vehicles, the server may also broadcast the vehicle traveling statuses and the surrounding environment information to related vehicles. If wanting, based on an obtained vehicle traveling status and obtained surrounding environment information of a front vehicle, a vehicle speed of the first vehicle, and the like, to perform lane changing to overtake the front vehicle, the first vehicle may send the lane changing request to the server. The lane changing request includes information about a distance between the first vehicle and a lane changing point.

S703: The server determines the lane changing point based on position information of the first vehicle and the information about the distance between the first vehicle and the lane changing point.

The server determines the lane changing point based on the position information that is of the first vehicle and that is identified based on a map and the information that is about the distance between the first vehicle and the lane changing point and that is carried in the change request. Certainly, the lane changing request may also carry the position information of the first vehicle.

S704: The server separately sends lane changing warning information to the first vehicle and the second vehicle.

Correspondingly, the first vehicle receives the lane changing warning information, and the second vehicle receives the lane changing warning information.

S705: The first vehicle receives the lane changing warning information, and prepares for lane changing.

S706: The second vehicle receives the lane changing warning information, and prepares for lane giving.

S707: The first vehicle sends a first response message to the server.

Correspondingly, the server receives the first response message.

S708: The second vehicle sends a second response message to the server.

S709: The first vehicle sends lane changing indication information.

Correspondingly, the server receives the lane changing indication information.

Different from the foregoing embodiment, in this embodiment, the first vehicle generates the lane changing indication information, and actively sends the lane changing indication information to the server.

S710: The server forwards the lane changing indication information to the second vehicle.

Correspondingly, the first vehicle obtains or receives the lane change indication information, and the second vehicle receives the lane changing indication information.

Optionally, the first vehicle may broadcast the lane changing indication information, and the server and the second vehicle receive the lane changing indication information.

S711: The first vehicle performs lane changing based on the lane changing indication information.

S712: The second vehicle performs lane giving based on the lane changing indication information.

S713: The first vehicle sends a lane changing result of the first vehicle to the server.

Correspondingly, the server obtains the lane changing result of the first vehicle.

S714: The second vehicle sends a lane changing result of the second vehicle to the server.

Correspondingly, the server obtains the lane changing result of the second vehicle.

S715: The server determines, through identification based on the lane changing result of the first vehicle and the lane changing result of the second vehicle, that the lane changing succeeds, and sends first recovery indication information to the first vehicle.

S716: The first vehicle recovers, based on the first recovery indication information, to an original lane for traveling.

S717: The first vehicle sends a third response message to the server.

The third response message indicates that the first vehicle has recovered to the original lane for driving.

S718: The server sends second recovery indication information to the second vehicle.

S719: The second vehicle executes the second recovery indication information, to adjust a vehicle speed for moving.

For the steps that are not described in detail, refer to the related steps in the foregoing embodiments. Details are not described herein again.

According to the vehicle lane changing method provided in this embodiment of this application, the server performs lane changing decision and indication for the first vehicle and the second vehicle, so that safe and reliable lane changing can be implemented, thereby improving road traffic efficiency.

The foregoing describes in detail the methods in the embodiments of this application, and the following provides apparatuses in the embodiments of this application.

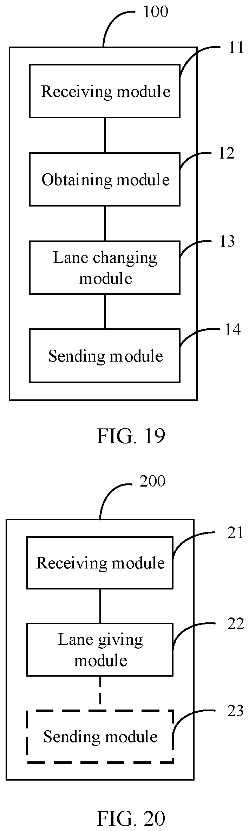

Based on a same concept as the vehicle lane changing methods in the foregoing embodiments, as shown in FIG. 19, an embodiment of this application further provides a vehicle lane changing apparatus 100. The vehicle lane changing apparatus may be applied to the vehicle lane changing methods in FIG. 4, FIG. 5A to FIG. 5C, FIG. 7A to FIG. 7C, FIG. 10A to FIG. 10C, FIG. 13A to FIG. 13C, FIG. 15A to FIG. 15C, and FIG. 18A to FIG. 18C. The vehicle lane changing apparatus 100 includes a receiving module 11, an obtaining module 12, a lane changing module 13, and a sending module 14. An example is as follows:

The receiving module 11 is configured to receive lane changing warning information sent by a server, where the lane changing warning information includes at least one piece of the following information: information about a distance between a first vehicle and a lane changing point, information about a distance between a second vehicle and the lane changing point, and lane changing time information, the first vehicle and the second vehicle travel on different lanes, and the first vehicle performs, at the lane changing point, lane changing to a lane on which the second vehicle is located.

The obtaining module 12 is configured to obtain first lane changing indication information, where the first lane changing indication information includes at least one piece of the following information: recommended vehicle speed interval information of the first vehicle and recommended vehicle speed interval information of the second vehicle.

The lane changing module 13 is configured to perform lane changing based on the first lane changing indication information.

The sending module 14 is configured to send a lane changing result of the first vehicle to the server.

In an implementation, the sending module 14 is configured to report vehicle traveling status information and surrounding environment information of the first vehicle to the server.

In another implementation, the sending module 14 is configured to send a response message to the server.

In another implementation, the receiving module 11 is configured to: if the lane changing result indicates that the lane changing succeeds, receive recovery indication information sent by the server, where the recovery indication information includes vehicle speed information and lane information; and
the lane changing module 13 is configured to recover, based on the recovery indication information, to a vehicle speed corresponding to the vehicle speed information for traveling, and/or to a lane corresponding to the lane information for traveling.

In another implementation, the receiving module 11 is configured to receive obliquely-front first vehicle and road information that is of the first vehicle and that is sent by the server, where the obliquely-front vehicle and road information of the first vehicle includes at least one piece of the following information: obliquely-front vehicle traveling status information of the first vehicle and obliquely-front obstacle information of the first vehicle; and
the receiving module 11 is further configured to receive front second vehicle and road information that is of the lane on which the obstacle is located and that is sent by the server.

In another implementation, the sending module 14 is configured to send a lane changing request to the server, where the lane changing request includes the information about the distance between the first vehicle and the lane changing point.

In another implementation, the sending module 14 is configured to send the first lane changing indication information to the server.

For more detailed descriptions of the receiving module 11, the obtaining module 12, the lane changing module 13, and the sending module 14, refer to the related descriptions of the first vehicle in the vehicle lane changing methods in FIG. 4, FIG. 5A to FIG. 5C, FIG. 7A to FIG. 7C, FIG. 10A to FIG. 10C, FIG. 13A to FIG. 13C, FIG. 15A to FIG. 15C, and FIG. 18A to FIG. 18C. Details are not described herein again.

According to the vehicle lane changing apparatus provided in this embodiment of this application, a lane changing decision and indication of the server for the first vehicle and the second vehicle are received, so that safe and reliable lane changing can be automatically implemented, thereby improving road traffic efficiency.

Based on a same concept as the vehicle lane changing methods in the foregoing embodiments, as shown in FIG. 20, an embodiment of this application further provides a vehicle lane changing apparatus 200. The vehicle lane changing apparatus may be applied to the vehicle lane changing methods in FIG. 4, FIG. 5A to FIG. 5C, FIG. 7A to FIG. 7C, FIG. 10A to FIG. 10C, FIG. 13A to FIG. 13C, FIG. 15A to FIG. 15C, and FIG. 18A to FIG. 18C. The vehicle lane changing apparatus 200 includes a receiving module 21 and a lane giving module 22, and may further include a sending module 23 (represented by dashed lines in the figure). An example is as follows:
The receiving module 21 is configured to receive lane changing warning information sent by a server, where the lane changing warning information includes at least one piece of the following information: information about a distance between a first vehicle and a lane changing point, information about a distance between a second vehicle and the lane changing point, and lane changing time information, the first vehicle and the second vehicle travel on different lanes, and the first vehicle performs, at the lane changing point, lane changing to a lane on which the second vehicle is located.

The receiving module 21 is further configured to receive first lane changing indication information sent by the server, where the first lane changing indication information includes at least one piece of the following information: recommended vehicle speed interval information of the first vehicle and recommended vehicle speed interval information of the second vehicle.

The lane giving module 22 is configured to perform lane giving based on the first lane changing indication information.

In an implementation, the sending module 23 is configured to report vehicle traveling status information and surrounding environment information of the second vehicle to the server.

In another implementation, the sending module 23 is configured to send a response message to the server, where the response message is used to indicate that the lane giving is supported or the lane giving is not supported.

For more detailed descriptions of the receiving module 21, the lane giving module 22, and the sending module, refer to the related descriptions of the second vehicle in the vehicle lane changing methods in FIG. 4, FIG. 5A to FIG. 5C, FIG. 7A to FIG. 7C, FIG. 10A to FIG. 10C, FIG. 13A to FIG. 13C, FIG. 15A to FIG. 15C, and FIG. 18A to FIG. 18C. Details are not described herein again.

According to the vehicle lane changing apparatus provided in this embodiment of this application, a lane changing decision and indication of the server for the first vehicle and the second vehicle are received, so that safe and reliable lane changing can be automatically implemented, thereby improving road traffic efficiency.

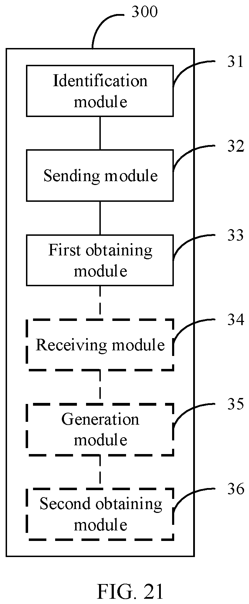

Based on a same concept as the vehicle lane changing methods in the foregoing embodiments, as shown in FIG. 21, an embodiment of this application further provides a vehicle lane changing apparatus 300. The vehicle lane changing apparatus may be applied to the vehicle lane changing methods in FIG. 4, FIG. 5A to FIG. 5C, FIG. 7A to FIG. 7C, FIG. 10A to FIG. 10C, FIG. 13A to FIG. 13C, FIG. 15A to FIG. 15C, and FIG. 18A to FIG. 18C. The vehicle lane changing apparatus 300 includes an identification module 31, a sending module 32, and a first obtaining module 33, and may further include a receiving module 34, a generation module 35, and a second obtaining module 36 (represented by dashed lines in the figure). An example is as follows:

The identification module 31 is configured to identify a lane changing point.

The sending module 32 is configured to send lane changing warning information, where the lane changing warning information includes at least one piece of the following information: information about a distance between a first vehicle and the lane changing point, information about a distance between a second vehicle and the lane changing point, and lane changing time information, the first vehicle and the second vehicle travel on different lanes, and the first vehicle performs, at the lane changing point, lane changing to a lane on which the second vehicle is located.

The sending module 32 is further configured to send first lane changing indication information, where the first lane changing indication information includes at least one piece of the following information: recommended vehicle speed interval information of the first vehicle and recommended vehicle speed interval information of the second vehicle.

The first obtaining module 33 is configured to obtain a lane changing result of the first vehicle.

In an implementation, the identification module 31 includes:
a first receiving unit, configured to receive vehicle traveling status information and surrounding environment information of the first vehicle, and vehicle traveling status information and surrounding environment information of the second vehicle;
a first obtaining unit, configured to obtain position information of the first vehicle and the second vehicle; and
a first identification unit, configured to identify the lane changing point based on the vehicle traveling status information and the surrounding environment information of the first vehicle, the vehicle traveling status information and the surrounding environment information of the second vehicle, and the position information of the first vehicle and the second vehicle.

In another implementation, the receiving module 34 is configured to receive a response message of the first vehicle and/or a response message of the second vehicle.

In another implementation, the sending module 32 is configured to: if a response message of the second vehicle is that lane giving is not supported or no response message of the second vehicle is received, send first lane changing deferring indication information to the first vehicle.

In another implementation, the generation module 35 is configured to generate the first lane changing indication information.

In another implementation, the sending module 32 is configured to: if the lane changing result indicates that the lane changing succeeds, send recovery indication information to the first vehicle and/or the second vehicle, where the recovery indication information includes vehicle speed information and lane information.

In another implementation, before the first vehicle bypasses an obstacle in a same direction or an opposite direction relative to the second vehicle, the second obtaining module 36 is configured to obtain obliquely-front first vehicle and road information of the first vehicle, where the obliquely-front vehicle and road information of the first vehicle includes at least one piece of the following information: obliquely-front vehicle traveling status information of the first vehicle and obliquely-front obstacle information of the first vehicle; and
the sending module 32 is configured to send the obliquely-front first vehicle and road information of the first vehicle to the first vehicle and/or an obliquely-front vehicle of the first vehicle; and
after the first vehicle bypasses the obstacle and before the first vehicle recovers to an original lane for traveling, the second obtaining module 36 is further configured to obtain front second vehicle and road information of the lane on which the obstacle is located; and
the sending module 32 is further configured to send the front second vehicle and road information of the lane on which the obstacle is located to the first vehicle.

In another implementation, the identification module 31 includes:
a second obtaining unit, configured to obtain at least one piece of the following information: tidal lane information, vehicle traveling status information of a tidal lane, or vehicle traveling status information of a neighboring vehicle of the tidal lane; and
a second identification unit, configured to identify, based on the at least one piece of obtained information, a lane changing point at which at least one original first vehicle on the tidal lane performs lane changing to a contra-directional neighboring lane, and a lane changing point at which at least one third vehicle performs lane changing to the tidal lane after the tidal lane is recovered, where
the at least one first vehicle performs lane changing through lane borrowing from at least one second vehicle on the contra-directional neighboring lane, and the at least one third vehicle performs lane changing through lane borrowing from at least one fourth vehicle on a lane on which the at least one third vehicle is located.

In another implementation, the sending module 32 is configured to send the first lane changing indication information to the at least one original first vehicle on the tidal lane, where the first lane changing indication information is used to indicate the at least one original first vehicle on the tidal lane to perform lane changing to the contra-directional neighboring lane.

In another implementation, the sending module 32 is configured to: after all the at least one original first vehicle on the tidal lane performs lane changing to the contra-directional neighboring lane, send second lane changing indication information to the at least one second vehicle that is to perform lane changing to the tidal lane after the tidal lane is recovered, where the second lane changing indication information is used to indicate the at least one second vehicle to perform lane changing to the tidal lane.

In another implementation, the identification module 31 includes: a second receiving unit, configured to receive a lane changing request of the first vehicle, where the lane changing request includes the information about the distance between the first vehicle and the lane changing point; and a determining unit, configured to determine the lane changing point based on position information of the first vehicle and the information about the distance between the first vehicle and the lane changing point.

In another implementation, the second receiving unit is configured to receive the first lane changing indication information sent by the first vehicle.

For more detailed descriptions of the identification module 31, the sending module 32, the first obtaining module 33, the receiving module 34, the generation module 35, and the second obtaining module 36, refer to the related descriptions of the server in the vehicle lane changing methods in FIG. 4, FIG. 5A to FIG. 5C, FIG. 7A to FIG. 7C, FIG. 10A to FIG. 10C, FIG. 13A to FIG. 13C, FIG. 15A to FIG. 15C, and FIG. 18A to FIG. 18C. Details are not described herein again.

According to the vehicle lane changing apparatus provided in this embodiment of this application, the server performs lane changing decision and indication for the first vehicle and the second vehicle, so that safe and reliable lane changing can be automatically implemented, thereby improving road traffic efficiency.

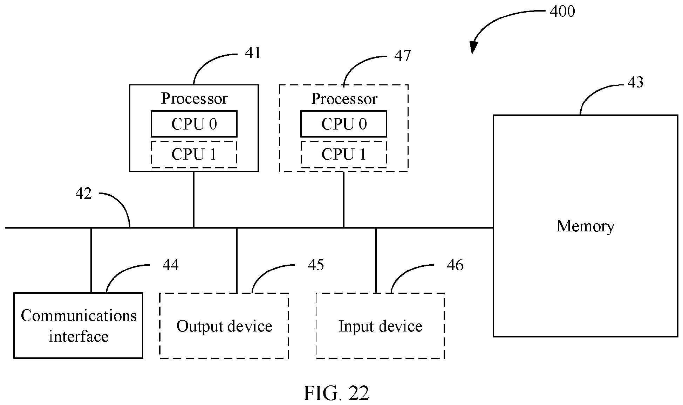

FIG. 22 is a schematic diagram of a structure of yet another vehicle lane changing apparatus according to an embodiment of this application. For example, all the vehicle lane changing apparatuses that implement the vehicle lane changing method processes in the foregoing embodiments may be implemented by the apparatus shown in FIG. 22.

An apparatus 400 includes at least one processor 41, a communications bus 42, a memory 43, and at least one communications interface 44. The apparatus 400 may be a general-purpose computer or server, or a special-purpose computer or server.

The processor 41 may be a general-purpose central processing unit (central processing unit, CPU), a microprocessor, an application-specific integrated circuit (application-specific integrated circuit, ASIC), or one or more integrated circuits configured to control program execution of the solutions of the present invention.

The communications bus 42 may include a channel for transmitting information between the foregoing components.

The communications interface 44 may be any transceiver, IP port, bus interface, or the like, and is configured to communicate with an internal or external device or apparatus, or communications network, for example, an Ethernet, a radio access network (radio access network, RAN), or a wireless local area network (wireless local area network, WLAN). For example, when the apparatus is a function unit integrated in a vehicle, the communications interface 304 includes one or more of the following interfaces, for example, a transceiver for communication between the vehicle and an external network, and a bus interface (for example, a controller area network (Controller Area Network, CAN) bus interface) for communication between the vehicle and another internal unit of the vehicle.

The memory 43 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage medium, an optical disc storage medium (including a compact disc, a laser disc, an optical disc, a digital versatile disc, a Blu-ray optical disc, or the like), a magnetic disk storage medium or another magnetic storage device, or any other medium that can carry or store expected program code in a form of instructions or a data structure and that can be accessed by a computer, but the memory 43 is not limited thereto. The memory may exist independently, and is connected to the processor through the bus. Alternatively, the memory may be integrated with the processor.

The memory 43 is configured to store application program code for performing the solutions of the present invention, and the processor 41 controls the execution. The processor 41 is configured to execute the application program code stored in the memory 43, to implement the function of the vehicle lane changing apparatus or the V2X server in the method in this application.

During specific implementation, in an embodiment, the processor 41 may include one or more CPUs, such as a CPU 0 and a CPU 1 in FIG. 22.

During specific implementation, in an embodiment, the apparatus 400 may include a plurality of processors, for example, the processor 41 and a processor 47 in FIG. 22. Each of the processors may be a single-CPU (single-CPU) processor, or may be a multi-CPU (multi-CPU) processor. The processor herein may be one or more devices, circuits, and/or processing cores for processing data (for example, computer program instructions).

During specific implementation, in an embodiment, the apparatus 400 may further include an output device 45 and an input device 46. The output device 45 communicates with the processor 41, and may display information in a plurality of manners. For example, the output device 45 may be a liquid crystal display (liquid crystal display, LCD), a light emitting diode (light emitting diode, LED) display device, a cathode ray tube (cathode ray tube, CRT) display device, a projector (projector), or the like. The input device 46 communicates with the processor 41, and may receive a user input in a plurality of manners. For example, the input device 46 may be a mouse, a keyboard, a touchscreen device, or a sensing device.

When the apparatus shown in FIG. 22 is a chip, a function/an implementation process of the communications interface 44 may be further implemented by using a pin, a circuit, or the like. The memory is a storage unit in the chip, such as a register or a cache. The storage unit may further be a storage unit located outside the chip.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a read-only memory (read-only memory, ROM), a random access memory (random access memory, RAM), or a magnetic medium such as a floppy disk, a hard disk, a magnetic tape, a magnetic disk, or an optical medium such as a digital versatile disc (digital versatile disc, DVD), or a semiconductor medium such as a solid state drive (solid state drive, SSD).

## Claims

1. A vehicle lane changing method, wherein the method comprises:
receiving lane changing warning information sent by a server, wherein the lane changing warning information comprises at least one piece of the following information: information about a distance between a first vehicle and a lane changing point, information about a distance between a second vehicle and the lane changing point, and lane changing time information, the first vehicle and the second vehicle travel on different lanes, and the first vehicle performs, at the lane changing point, lane changing to a lane on which the second vehicle is located;
obtaining first lane changing indication information, wherein the first lane changing indication information comprises at least one piece of the following information: recommended vehicle speed interval information of the first vehicle and recommended vehicle speed interval information of the second vehicle;
performing lane changing based on the first lane changing indication information; and
sending a lane changing result of the first vehicle to the server.

2. The method according to claim 1, wherein the method further comprises:
reporting vehicle traveling status information and surrounding environment information of the first vehicle to the server.

3. The method according to claim 1 or 2, wherein after the receiving lane changing warning information sent by a server, the method further comprises:
sending a response message to the server.

4. The method according to any one of claims 1 to 3, wherein the method further comprises:
if the lane changing result indicates that the lane changing succeeds, receiving recovery indication information sent by the server, wherein the recovery indication information comprises vehicle speed information and lane information; and
recovering, based on the recovery indication information, to a vehicle speed corresponding to the vehicle speed information for traveling, and/or to a lane corresponding to the lane information for traveling.

5. The method according to claim 4, wherein before the first vehicle bypasses an obstacle in a same direction or an opposite direction relative to the second vehicle, the method further comprises:
receiving obliquely-front first vehicle and road information that is of the first vehicle and that is sent by the server, wherein the obliquely-front vehicle and road information of the first vehicle comprises at least one piece of the following information: obliquely-front vehicle traveling status information of the first vehicle and obliquely-front obstacle information of the first vehicle; and
after the first vehicle bypasses the obstacle and before the first vehicle recovers to the original lane for traveling, the method further comprises:
receiving front second vehicle and road information that is of the lane on which the obstacle is located and that is sent by the server.

6. The method according to claim 1, wherein the method further comprises:
sending a lane changing request to the server, wherein the lane changing request comprises the information about the distance between the first vehicle and the lane changing point.

7. The method according to claim 6, wherein the method further comprises:
sending the first lane changing indication information to the server.

8. A vehicle lane changing method, wherein the method comprises:
receiving lane changing warning information sent by a server, wherein the lane changing warning information comprises at least one piece of the following information: information about a distance between a first vehicle and a lane changing point, information about a distance between a second vehicle and the lane changing point, and lane changing time information, the first vehicle and the second vehicle travel on different lanes, and the first vehicle performs, at the lane changing point, lane changing to a lane on which the second vehicle is located;
receiving first lane changing indication information sent by the server, wherein the first lane changing indication information comprises at least one piece of the following information: recommended vehicle speed interval information of the first vehicle and recommended vehicle speed interval information of the second vehicle; and
performing lane giving based on the first lane changing indication information.

9. The method according to claim 8, wherein the method further comprises:
reporting vehicle traveling status information and surrounding environment information of the second vehicle to the server.

10. The method according to claim 8 or 9, wherein the method further comprises:
sending a response message to the server, wherein the response message is used to indicate that the lane giving is supported or the lane giving is not supported.

11. A vehicle lane changing method, wherein the method comprises:
identifying a lane changing point;
sending lane changing warning information, wherein the lane changing warning information comprises at least one piece of the following information: information about a distance between a first vehicle and the lane changing point, information about a distance between a second vehicle and the lane changing point, and lane changing time information, the first vehicle and the second vehicle travel on different lanes, and the first vehicle performs, at the lane changing point, lane changing to a lane on which the second vehicle is located;
sending first lane changing indication information, wherein the first lane changing indication information comprises at least one piece of the following information: recommended vehicle speed interval information of the first vehicle and recommended vehicle speed interval information of the second vehicle; and
obtaining a lane changing result of the first vehicle.

12. The method according to claim 11, wherein the identifying a lane changing point comprises:
receiving vehicle traveling status information and surrounding environment information of the first vehicle, and vehicle traveling status information and surrounding environment information of the second vehicle;
obtaining position information of the first vehicle and the second vehicle; and
identifying the lane changing point based on the vehicle traveling status information and the surrounding environment information of the first vehicle, the vehicle traveling status information and the surrounding environment information of the second vehicle, and the position information of the first vehicle and the second vehicle.

13. The method according to claim 11 or 12, wherein after the sending lane changing warning information, the method further comprises:
receiving a response message of the first vehicle and/or a response message of the second vehicle.

14. The method according to claim 11 or 12, wherein after the sending lane changing warning information, the method further comprises:
if a response message of the second vehicle is that lane giving is not supported or receiving no response message of the second vehicle, sending first lane changing deferring indication information to the first vehicle.

15. The method according to any one of claims 11 to 14, wherein the method further comprises:
generating the first lane changing indication information.

16. The method according to any one of claims 11 to 15, wherein the method further comprises:
if the lane changing result indicates that the lane changing succeeds, sending recovery indication information to the first vehicle and/or the second vehicle, wherein the recovery indication information comprises vehicle speed information and lane information.

17. The method according to claim 16, wherein before the first vehicle bypasses an obstacle in a same direction or an opposite direction relative to the second vehicle, the method further comprises:
obtaining obliquely-front first vehicle and road information of the first vehicle, wherein the obliquely-front vehicle and road information of the first vehicle comprises at least one piece of the following information: obliquely-front vehicle traveling status information of the first vehicle and obliquely-front obstacle information of the first vehicle; and
sending the obliquely-front first vehicle and road information of the first vehicle to the first vehicle and/or an obliquely-front vehicle of the first vehicle; and
after the first vehicle bypasses the obstacle and before the first vehicle recovers to an original lane for traveling, the method further comprises:
obtaining front second vehicle and road information of the lane on which the obstacle is located; and
sending the front second vehicle and road information of the lane on which the obstacle is located to the first vehicle.

18. The method according to claim 11, wherein the identifying a lane changing point comprises:
obtaining at least one piece of the following information: tidal lane information, vehicle traveling status information of a tidal lane, and vehicle traveling status information of a neighboring lane of the tidal lane; and
identifying, based on the at least one piece of obtained information, a lane changing point at which at least one original first vehicle on the tidal lane performs lane changing to a contra-directional neighboring lane, and a lane changing point at which at least one third vehicle performs lane changing to the tidal lane after the tidal lane is recovered, wherein
the at least one first vehicle performs lane changing through lane borrowing from at least one second vehicle on the contra-directional neighboring lane.

19. The method according to claim 18, wherein the sending first lane changing indication information comprises:
sending the first lane changing indication information to the at least one original first vehicle on the tidal lane, wherein the first lane changing indication information is used to indicate the at least one original first vehicle on the tidal lane to perform lane changing to the contra-directional neighboring lane.

20. The method according to claim 18 or 19, wherein the sending first lane changing indication information comprises:
after all the at least one original first vehicle on the tidal lane performs lane changing to the contra-directional neighboring lane, sending second lane changing indication information to the at least one third vehicle, wherein the second lane changing indication information is used to indicate the at least one third vehicle to perform lane changing to the tidal lane.

21. The method according to claim 11, wherein the identifying a lane changing point comprises:
receiving a lane changing request of the first vehicle, wherein the lane changing request comprises the information about the distance between the first vehicle and the lane changing point; and
determining the lane changing point based on position information of the first vehicle and the information about the distance between the first vehicle and the lane changing point.

22. The method according to claim 21, wherein before the sending first lane changing indication information, the method further comprises:
receiving the first lane changing indication information sent by the first vehicle.

23. A vehicle lane changing apparatus, wherein the apparatus is configured to perform the method according to any one of claims 1 to 7.

24. A vehicle lane changing apparatus, wherein the apparatus is configured to perform the method according to any one of claims 8 to 10.

25. A vehicle lane changing apparatus, wherein the apparatus is configured to perform the method according to any one of claims 11 to 22.

26. A vehicle lane changing apparatus, comprising a processor, a transceiver, and a memory, wherein the memory is configured to store a computer program, the computer program comprises program instructions, and the processor is configured to invoke the program instructions to perform the method according to any one of claims 1 to 7.

27. A vehicle lane changing apparatus, comprising a processor, a transceiver, and a memory, wherein the memory is configured to store a computer program, the computer program comprises program instructions, and the processor is configured to invoke the program instructions to perform the method according to any one of claims 8 to 10.

28. A vehicle lane changing apparatus, comprising a processor, a transceiver, and a memory, wherein the memory is configured to store a computer program, the computer program comprises program instructions, and the processor is configured to invoke the program instructions to perform the method according to any one of claims 11 to 22.

29. A computer-readable storage medium, wherein the computer-readable storage medium stores instructions, and when the instructions are run on a computer, the computer is enabled to perform the method according to any one of claims 1 to 7, the method according to any one of claims 8 to 10, or the method according to any one of claims 11 to 22.
